# EUROPÄISCHE PATENTSCHRIFT

(11) **EP 4 252 522 B1**
(45) Veröffentlichungstag und Bekanntmachung des Hinweises auf die Patenterteilung: **25.02.2026**
(21) Anmeldenummer: 23164985.6
(22) Anmeldetag: 29.03.2023
(51) Int. Cl.: A01F 25/13, A01F 25/16

(54) **SYSTEM UND VERFAHREN ZUR ABDECKUNG EINER FÜLLUNG EINES SILOS, INSBESONDERE EINES FAHRSILOS**
SYSTEM AND METHOD FOR COVERING A FILLING OF A SILO, IN PARTICULAR A SILO
SYSTÈME ET PROCÉDÉ DE COUVERTURE D'UN REMPLISSAGE D'UN SILO, EN PARTICULIER D'UN SILO DE TRANSPORT

(30) Priorität: 31.03.2022 DE 102022107653; 03.11.2022 DE 102022129133
(43) Veröffentlichungstag der Anmeldung: 04.10.2023
(73) Patentinhaber: Hegg, Guido, 9322 Egnach/TG (CH)
(72) Erfinder: Hegg, Guido, 9322 Egnach/TG (CH)
(74) Vertreter: Heilein, Ernst-Peter

(56) Entgegenhaltungen:
- EP-A1- 2 721 921
- DE-A1- 102008 060 243
- FR-A1- 2 591 418
- US-A- 3 991 718
- US-A1- 2003 172 597

## Beschreibung

Die vorliegende Erfindung betrifft ein System zur Abdeckung einer Füllung eines Silos, insbesondere eines Fahrsilos, wenigstens umfassend:
- eine flexible Plane zum wasser- und/oder luftdichten Abdecken zumindest eines Teils der Füllung;
- eine Abrollvorrichtung, welche eingerichtet ist, die Plane über die Füllung hinweg ab- und aufzurollen;
- wenigstens ein Aufnahmeraum für ein Beschwerungsmaterial zur Beschwerung der Plane;
- wenigstens ein Materialreservoir für das Beschwerungsmaterial; und
- wenigstens eine Pumpe zum Pumpen des Beschwerungsmaterials über wenigstens einen Zulaufschlauch vom Materialreservoir in den Aufnahmeraum.

Darüber hinaus betrifft die vorliegende Erfindung auch ein Verfahren zur Abdeckung einer Füllung eines Silos, insbesondere eines Fahrsilos, mit einem derartigen System.

Zur Gewährleistung einer möglichst hohen Qualität einer Silage, also insb. ein durch Milchsäuregärung konserviertes Futtermittel wie Gras (Grassilage), Mais (Maissilage) aber auch Klee, Luzerne, Ackerbohnen oder Getreide (Ganzpflanzensilage), werden Fahrsilos nach der Befüllung in der Regel mit einer luft- und/oder feuchtigkeitsundurchlässigen Abdeckung zumeist in Form einer oder mehrerer Folien versehen. Besagte Abdeckung muss dann nach dem Aufbringen mit Gewichten beschwert werden, um eine ausreichende Dichtigkeit zu erzielen und nicht durch Windstöße unbeabsichtigt verschoben zu werden. Bei einer Entnahme der Silage muss die Abdeckung in gleichem Maße wieder entfernt werden.

Ursprünglich erfolgte dieser Abdeckungsprozess manuell, wobei mehrere Arbeiter zunächst die sperrige und schwere Abdeckungsfolie auf der gewöhnlich aus Grünfutter bestehenden Füllung des Fahrsilos aufbringen und dann durch Heranschaffen einzelner Gewichte, z.B. in Form von Sandsäcken, möglichst luftdicht beschweren mussten, so dass das Grünfutter zur Silage vergären kann. Dieser manuelle Prozess war sehr zeit- und kraftaufwendig und bedurfte stets mehrerer Personen.

Um besagten Abdeckungsprozess zu erleichtern und auch durch eine einzige Person ausführbar zu machen, wurden im Laufe der Zeit verschiedene Verfahren und Vorrichtungen zur Abdeckung von Fahrsilos entwickelt.

Die FR 2 591 418 A1 beschreibt beispielsweise eine Vorrichtung zum Aufheben und Aufwickeln von Nylonplanen, die Silos zur Lagerung von Silage abdecken. Aus der EP 2 721 921 A1 ist ein automatisiertes Fütterungssystem mit einer Auf- und Abwickelvorrichtung für eine Abdeckung eines Bunkersilos bekannt geworden. Die US 3 991 718 A beschreibt eine Auf- und Abwickelvorrichtung für die Abdeckung des länglichen Trogs eines Silos, und aus der DE 10 2008 060 243 A1 ist ein Verfahren und eine Einrichtung zum Auflegen und Abnehmen der Beschwerung von Folienabdeckungen bei Flachsilos und Silohaufen bekannt geworden, bei dem die, für die Beschwerung des auf die Füllung aufgelegten Folienpakets notwendigen Gewichte an einem Netz oder einer Folienbahn befestigt sind, welches bzw. welche auf einer Rolle aufgewickelt ist, beim Auflegen nach dem Füllen und Abdecken über die Silooberfläche abgewickelt und bei der Entnahme entsprechend dem Fortschritt des Abbaus auf die Rolle wieder aufgewickelt werden kann. Das Auf- und Abwickeln des Netzes bzw. der Folienbahn kann dabei mit Hilfe eines landwirtschaftlichen Fahrzeugs erfolgen und spart somit vorteilhaft Personal ein. Allerdings sind in dem hier beschriebenen Verfahren bzw. bei der hier beschriebenen Einrichtung die Gewichte, z.B. Sandsäcke, Teil des Netzes oder der Folienbahn. Sie müssen also immer mit auf- und abgerollt werden und verbleiben auch auf der Einrichtung, wenn diese nicht benutzt wird, was die Lagerung der Einrichtung erschwert.

Zur Behebung dieses Problems ist u.a. aus der US 2003/017 25 97 A1 ein alternatives System für eine Siloabdeckung bekannt geworden, bei dem die Abdeckung Blasen umfasst, die mit einer Flüssigkeit befüllbar sind, wobei die Abdeckung wie zuvor von einer Rolle auf- und abgewickelt werden kann. Soll die Füllung eines Fahrsilos abgedeckt werden, wird besagte Abdeckung über die Füllung gerollt und dann mit Flüssigkeit, insbesondere Wasser, befüllt. Das Wasser dient dabei als Gewicht für die Abdeckung. Zur Entnahme der Füllung oder bei Nichtbenutzung der Abdeckung kann die Flüssigkeit wieder aus den Blasen entfernt werden, die Abdeckung verliert somit Gewicht und lässt sich auch kompakter aufrollen und lagern. Gerade im Winter bei tiefen Außentemperaturen, wenn Silage zur Tierfütterung benötigt wird, haben derartige Abdeckungssysteme des Standes der Technik jedoch den Nachteil, dass die Flüssigkeit - zumeist Wasser - in den Blasen der Abdeckung gefriert und dann eine Entnahme der Füllung erschwert, wenn nicht gänzlich verhindert wird.

Zur Vermeidung des Einfrierens bei tiefen Temperaturen wird im Stand der Technik deshalb oftmals kein Wasser, sondern eine Salzlösung mit niedrigerem Gefrierpunkt oder wässrige Lösungen anderweitiger, den Gefrierpunkt herabsetzender Substanzen (z.B. verschiedene Alkohole) eingesetzt. Der Einsatz derartiger Zusatzstoffe ist allerdings teuer und kann bei einem unbeabsichtigten Austritt der Flüssigkeit in den Erdboden zu Umweltschäden führen. Zudem kann durch Verdunstung eines Teils des Wassers und/oder ggf. des Zusatzstoffes die Notwendigkeit bestehen, die Zusatzstoffkonzentration zu überwachen und bei unerwünschten Veränderungen zu korrigieren, was nachteilig einen gewissen Zeitaufwand erfordert.

Hiervon ausgehend liegt der vorliegenden Erfindung die Aufgabe zugrunde, ein gegenüber dem Stand der Technik verbessertes System sowie ein Verfahren zur Abdeckung einer Füllung eines Silos, insbesondere eines Fahrsilos, bereitzustellen, welches es ermöglicht, eine Siloabdeckung einfach und schnell auf der Füllung eines Fahrsilos aufzubringen bzw. wieder zu entfernen, wobei die Abdeckung bei Nichtbenutzung kompakt lagerbar sein soll und wobei auf etwaige Zusätze zu einem flüssigen Beschwerungsmittel, insbesondere Wasser, bzw. auf anderweitige umweltbelastende flüssige Beschwerungsmittel verzichtet werden können soll.

Diese Aufgabe wird durch ein System mit den Merkmalen des unabhängigen Patentanspruchs 1 bzw. durch ein Verfahren mit den Merkmalen des nebengeordneten Patentanspruchs 14 gelöst.

Das erfindungsgemäße System zur Abdeckung einer Füllung eines Silos, insbesondere eines Fahrsilos, zeichnet sich gegenüber gattungsbildenden Systemen dadurch aus, dass der wenigstens eine Aufnahmeraum als Schlauchsystem mit einem Außenschlauch und einem, im Inneren des Außenschlauchs verlaufenden Innenschlauch gebildet ist, wobei der Innenschlauch wenigstens eine Öffnung umfasst, die das vom Innenschlauch umschlossene Volumen mit dem vom Außenschlauch umschlossenen Volumen verbindet; und wobei der Innenschlauch und der Außenschlauch über ein Verbindungselement derart mit der Pumpe und dem Materialreservoir wirkverbunden sind, dass für das Beschwerungsmaterial ein geschlossenes Umlaufsystem aus Schlauchsystem, Pumpe und Materialreservoir gebildet ist.

Das erfindungsgemäße Verfahren zeichnet sich entsprechend dadurch aus, dass zum wasser- und/oder luftdichten Abdecken zumindest eines Teils der Füllung des Silos mit einer flexiblen Plane, diese Plane dadurch beschwert wird, dass ein Beschwerungsmaterial innerhalb eines geschlossenen Umlaufsystems aus einem, an der Plane angeordneten, als Schlauchsystem mit einem Außenschlauch und einem, im Inneren des Außenschlauchs verlaufenden Innenschlauch ausgebildeten, Aufnahmeraum, einer Pumpe und einem Materialreservoir kontinuierlich gepumpt wird.

Das erfindungsgemäße System zur Abdeckung einer Füllung eines Silos, insbesondere eines Fahrsilos, sowie das entsprechende erfindungsgemäße Verfahren ermöglichen vorteilhaft einen kontinuierlichen Umlauf von Beschwerungsmaterial, insbesondere (Regen-)Wasser, im Aufnahmeraum. Durch die stetige Bewegung des Beschwerungsmaterials sowie durch die dabei auftretenden Verwirbelungen wird vorteilhaft das Einfrieren des Beschwerungsmaterials, insbesondere von Wasser, bei tiefen Außentemperaturen verhindert. Zudem ermöglicht das erfindungsgemäße System auch die zusätzliche Nutzung von Erdwärme zur Erwärmung des Beschwerungsmaterials und arbeitet somit besonders energieeffizient. Das Hinzufügen eines Mittels zur Gefrierpunktserniedrigung zum Beschwerungsmaterial kann durch das erfindungsgemäße System vorteilhaft vermieden werden, was nicht nur Kosten spart, sondern auch eine Umweltbelastung durch einen etwaigen Austritt eines Mittels zur Gefrierpunktserniedrigung aus dem Aufnahmeraum vermeidet. Als besonders kostengünstige und gleichzeitig ressourcenschonende und somit nachhaltige Betriebsvariante ermöglicht das erfindungsgemäße System erstmalig die Verwendung von gewöhnlichem Regenwasser als Beschwerungsmaterial.

Weitere vorteilhafte Ausgestaltungen und Weiterbildungen sind Gegenstand der abhängigen Ansprüche.

In einer bevorzugten Ausgestaltung des Systems hat sich bewährt, wenn das Verbindungselement einen ersten Anschlussabschnitt zur Wirkverbindung mit dem Außenschlauch des Schlauchsystems, einen zweiten Anschlussabschnitt zur Wirkverbindung mit dem Innenschlauch des Schlauchsystems und einen dritten Anschlussabschnitt zur Wirkverbindung mit einem Rücklaufschlauch zum Rücklauf des Beschwerungsmaterials zum Materialreservoir umfasst, wobei das Schlauchsystem mit dem Verbindungselement derart verbunden ist, dass der Außenschlauch direkt mit dem ersten Anschlussabschnitt und der Innenschlauch durch ein offenes Ende des Außenschlauchs und das Innere des Verbindungselements hindurch mit dem zweiten Anschlussabschnitt verbindbar ist.

Ein derartiges Verbindungselement ermöglicht es vorteilhaft, sowohl den am offenen Ende des Schlauchsystems aus dem Außenschlauch austretenden Innenschlauch als auch den Außenschlauch selbst über weitere Zu- und Rücklaufschläuche mit der Pumpe und/oder dem Materialreservoir zu verbinden und dadurch ein geschlossenes Umlaufsystem für das Beschwerungsmaterial bereitzustellen. Die Wirkverbindung von Innenschlauch und Außenschlauch mit den Zu- bzw. Rücklaufschläuchen erfolgt dabei vorteilhaft unabhängig voneinander.

Dabei ist es von Vorteil, wenn der zweite Anschlussabschnitt von einem Deckel nach außen hin dicht abgeschlossen ist, wobei der Deckel wenigstens ein Durchgangsrohr mit einem ersten, außerhalb des Verbindungselements liegenden Ende und einem zweiten, innerhalb des Verbindungselements liegenden Ende umfasst, so dass das Beschwerungsmaterial vom Materialreservoir durch das Durchgangsrohr in das Innere des Verbindungselements, insbesondere in das Innere des Innenschlauchs, gelangen kann. Der Deckel kann den zweiten Anschlussabschnitt des Verbindungselements insbesondere bezüglich des aus dem Außenschlauch in das Verbindungselement gelangende Beschwerungsmaterial vorteilhaft nach außen abdichten, wobei über das Durchgangsrohr unabhängig davon ein Zugang für das über den Zulaufschlauch zum Schlauchsystem transportierten Beschwerungsmaterial aus dem Materialreservoir zum Innenschlauch gewährleistet bleibt.

Zudem hat es sich bewährt, wenn das erste, außerhalb des Verbindungselements liegende Ende des Durchgangsrohrs mit dem Zulaufschlauch für das Beschwerungsmaterial verbindbar ist; und wenn das zweite, innerhalb des Verbindungselements liegende Ende des Durchgangsrohrs mit dem Innenschlauch verbindbar ist. Der Deckel kann darüber hinaus vorzugsweise über eine Schraub- und/oder Steckverbindung mit dem zweiten Anschlussabschnitt des Verbindungselements verbindbar sein. Insbesondere eine Schraubverbindung ermöglicht dabei eine sichere und gleichzeitig schnell zu öffnen und zu schließende Verbindung, was das Auswechseln von Innenschläuchen innerhalb eines Schlauchsystems vorteilhaft erleichtert.

In einer weiteren bevorzugten Ausgestaltung der Erfindung kann am Innenschlauch eine Vielzahl von Öffnungen angeordnet sein, wobei die Öffnungen vorzugsweise entlang der Längsachse des Innenschlauchs zueinander derart beabstandet angeordnet sind, dass ein Abstand zwischen den einzelnen Öffnungen in Richtung eines geschlossenen Endes des Innenschlauchs zunimmt. Der Durchmesser besagter Öffnungen kann in einem Bereich von 1,5 mm bis 3 mm liegen, bevorzugt weisen sie einen Durchmesser von 2 mm auf. Die Öffnungen können dabei insbesondere zyklisch am Mantel des Innenschlauchs angeordnet sein, so dass sie bezüglich der Längsachse des Innenschlauchs auf unterschiedlichen Parallelen zu dieser Längsachse liegen. Eine Vielzahl von zueinander beabstandeten, vorzugsweise zyklisch am Mantel des Innenschlauchs angeordneten Öffnungen ermöglicht vorteilhaft den Austritt von Beschwerungsmaterial von dem vom Innenschlauch umschlossenen Volumen in das vom Außenschlauch umschlossene Volumen über die gesamte Länge des Innenschlauchs hinweg. Insbesondere beim Auf- und Abrollen eines Aufnahmeraums zusammen mit der Plane mit Hilfe der Abrollvorrichtung bleibt dadurch der Austritt von Beschwerungsmaterial von dem vom Innenschlauch umschlossenen Volumen in das vom Außenschlauch umschlossene Volumen auch bei verkürzter Länge des Schlauchsystems vorteilhaft möglich. Ein in Richtung des geschlossenen Endes des Innenschlauchs zunehmender Abstand zwischen den einzelnen Öffnungen ermöglicht vorteilhaft die Aufrechterhaltung eines vergleichsweisen hohen Drucks im Innenschlauch, insbesondere bei einem lang ausgerollten Schlauchsystem, und gewährleistet damit vorteilhaft einen gleichmäßigen Materialübergang vom Innenschlauch zum Außenschlauch.

Bewährt hat sich zudem eine Ausgestaltung der Erfindung, bei der der Innenschlauch über ein Verbindungsmittel wenigstens abschnittsweise mit der Innenwand des Außenschlauchs verbunden ist, wobei die Verbindung zwischen Innenschlauch und Außenschlauch über das Verbindungsmittel vorzugsweise bezüglich einer Länge des Schlauchsystems in einem mittleren Bereich gebildet ist; und wobei der Innenschlauch an einem dem Verbindungselement nahen Ende des Schlauchsystems vorzugsweise unverbunden mit dem Außenschlauch bleibt und mittels eines Führungsschlauchs zum Verbindungsmittel geführt wird. Das Verbindungsmittel kann dabei bevorzugt eine Kunststoffschweißnaht sein, mit der die Außenwand des Innenschlauch mit der Innenwand des Außenschlauchs verbunden ist. Alternativ oder kumulativ können Innen- und Außenschlauch auch miteinander verklebt werden, sodass das Verbindungsmittel eine Klebstoffschicht bzw. ein Klebestreifen sein kann.

Darüber hinaus hat sich eine Ausgestaltung der Erfindung bewährt, welche wenigstens einen Temperatursensor zur Messung der Temperatur des Beschwerungsmaterials umfasst, wobei der Temperatursensor vorzugsweise im Bereich des Verbindungselements angeordnet sein kann. Ein Temperatursensor ermöglicht vorteilhaft die Kontrolle der Ist-Temperatur des Beschwerungsmaterials, insbesondere des (Regen-)Wassers, vor dem Eintritt in das Schlauchsystem und kann Kontrolldaten für die Pumpe liefern.

In einer weiteren bevorzugten Ausgestaltung der Erfindung kann das Materialreservoir bevorzugt ein im Erdboden angeordneter Behälter sein, welcher eingerichtet ist, mit der Umgebung Wärme auszutauschen, wobei das Materialreservoir vorzugsweise ein zylindrischer Behälter mit einem Durchmesser von 3 m, einer Höhe von 3,5 bis 4,5 m, bevorzugt 4,0 m, ist; und/oder wobei das Materialreservoir vorzugsweise derart im Erdboden angeordnet ist, dass es sich bis in eine Tiefe von 3,5 bis 5,5 m, bevorzugt 4,0 bis 5,0 m, unter die Erdoberfläche hinab erstreckt. Das Materialreservoir kann vorzugsweise aus Beton mit einer Wandstärke von 15 cm bis 25 cm, bevorzugt mit einer Wandstärke von 20 cm, insbesondere aus Fertigbetonteilen, gefertigt sein. Ein derartiges Materialreservoir ermöglicht es vorteilhaft das Beschwerungsmaterial, insbesondere Wasser bzw. Regenwasser, während seiner Verweildauer im Materialreservoir bzw. in den ebenfalls im Erdboden verlaufenden Abschnitten der Zu- und Rücklaufleitungen durch Erdwärme zu temperieren. Dabei können im Winter vorteilhaft Temperaturen des Beschwerungsmaterials oberhalb des Gefrierpunkts von Wasser unter Normalbedingungen (0 °C) und im Sommer deutlich unterhalb der dann oftmals herrschenden Lufttemperaturen von > 20 °C ohne zusätzlichen Energieaufwand für das Erwärmen bzw. Kühlen erreicht werden.

Dabei ist es von Vorteil, wenn das als ein im Erdboden angeordneter Behälter ausgestaltete Materialreservoir einen Eintritt für das vom Aufnahmeraum zum Materialreservoir fließende Beschwerungsmaterial und einen Austritt für das vom Materialreservoir zum Aufnahmeraum fließende Beschwerungsmaterial umfasst, wobei der Eintritt bezüglich des Erdbodens bevorzugt in einer größeren Tiefe liegt als der Austritt. Das vom Aufnahmeraum zum Materialreservoir fließende Beschwerungsmaterial ist bei tiefen Außentemperaturen durch seinen vorherigen Aufenthalt im Aufnahmeraum im Vergleich zu bereits im Materialreservoir befindlichen Beschwerungsmaterial abgekühlt und hat deshalb normalerweise eine etwas größere Dichte. Durch den bezüglich des Erdbodens in einer größeren Tiefe als der Austritt liegenden Eintritt kann das Beschwerungsmaterial in einen Bereich des Materialreservoirs nahe dem Boden einfließen, sich dort sammeln und im Materialreservoir befindliches, bereits erwärmtes Beschwerungsmaterial nach oben, also zur Erdoberfläche hin, verdrängen. Besagtes, wieder erwärmtes Beschwerungsmaterial kann sich dann im Bereich des Materialreservoirs nahe der Erdoberfläche sammeln und vorteilhaft über den sich in geringeren Tiefen als der Eintritt angeordneten Austritt aus dem Materialreservoir wieder hinausfließen bzw. mit Hilfe einer Pumpe herausgefördert werden. Die Erwärmung erfolgt dabei vorteilhaft passiv, lediglich durch Aufnahme von Erdwärme aus dem umliegenden Erdreich.

Darüber hinaus hat sich eine Ausgestaltung der Erfindung bewährt, bei der der Zulaufschlauch dazu eingerichtet ist, mit der Umgebung Wärme auszutauschen, wobei der Zulaufschlauch bevorzugt zumindest teilweise um das Materialreservoir herumgeführt ist; und/oder dass der Zulaufschlauch einen ersten Zulaufabschnitt aufweist, welcher vom Materialreservoir über eine Pumpe zu einem Steuerungsschacht verläuft, und wenigstens einen zweiten Zulaufabschnitt aufweist, welcher vom Steuerungsschacht aus innerhalb eines Bodenbereichs des Silos und dann wieder zurück in den Steuerungsschacht verläuft, wobei wenigstens ein Teil des Zulaufschlauches des zweiten Zulaufabschnittes vorzugsweise in einen Boden des Silos integriert ist. Ein Zulaufschlauch, welcher dazu eingerichtet ist, mit der Umgebung Wärme auszutauschen, kann vorteilhaft über seine Erstreckung hinweg im Bereich vom Materialreservoir bis zur Pumpe sowie von der Pumpe zu dem oder den Aufnahmebereichen vorteilhaft Wärme, insbesondere Erdwärme, aus der Umgebung aufnehmen und an das innerhalb des Zulaufschlauchs befindliche Beschwerungsmaterial übertragen. Verläuft der Zulaufschlauch wenigstens teilweise innerhalb eines Bodenbereichs des Silos und/oder ist der Zulaufschlauch, insbesondere dessen zweiter Zulaufabschnitt, in einen Boden des Silos integriert, kann zudem vorteilhaft die bei der Silierung entstehende Reaktionswärme über den Zulaufschlauch an das Beschwerungsmaterial übertragen werden. Der Zulaufschlauch kann darüber hinaus vorzugsweise aus einem starren formstabilen Material, wie beispielsweise einem Kunststoff-Gewebe-Verbundmaterial, gebildet sein, sodass Bewegungen des Erdreichs bzw. Krafteinwirkungen durch das Aushärten des Betons beim Einlassen des Zulaufschlauchs in den Siloboden oder aber Krafteinwirkungen durch auf dem Zulaufschlauch lastenden Silage besagten Zulaufschlauch nicht quetschen, was wiederum den Durchfluss des Beschwerungsmaterials durch den Zulaufschlauch nachteilig einschränken könnte. Alternativ oder kumulativ kann der Zulaufschlauch auch aus starren Rohren bzw. Rohstücke, insbesondere aus Polyethylen, gebildet sein. Besonders bevorzugt sind dabei rollbare PE (Polyethylen)-Rohre mit einem Durchmesser von 50 mm.

Schließlich hat sich eine Ausgestaltung des erfindungsgemäßen Systems bewährt, welche wenigstens eine Sammelvorrichtung für Regenwasser umfasst, wobei die Sammelvorrichtung eingerichtet ist, Regenwasser, welches sich in wenigstens einem Sammelbereich auf der Plane sammelt, aufzunehmen und, vorzugsweise über wenigstens eine Filtervorrichtung, dem Materialreservoir als Beschwerungsmaterial zuzuführen. Mit Hilfe einer oder mehrerer derartiger Sammelvorrichtung kann das Materialreservoir bei Bedarf mit Regenwasser, welches sich auf der Plane sammelt, aufgefüllt und damit einer etwaigen Verdunstung des Beschwerungsmittels entgegengewirkt werden. Ein Ausgleich des Beschwerungsmittelfüllstandes (ein Wiederauffüllen), insbesondere mit wertvollem Trinkwasser, kann dadurch vorteilhaft vermieden werden. Eine Filtervorrichtung, welche das im Sammelbereich der Plane gesammelte Regenwasser filtriert bevor es dem Materialreservoir zugeführt wird, verhindert vorteilhaft das Eintragen von Blättern, Samen, Steinen, und Ähnliches in das Materialreservoir. Dadurch werden insbesondere die im System vorhandenen Pumpen vor einer Störung oder Beschädigung geschützt.

Bei dem erfindungsgemäßen Verfahren zur Abdeckung einer Füllung eines Silos, insbesondere eines Fahrsilos, mit einem System wie zuvor beschrieben hat sich eine Ausgestaltung des besagten Verfahrens bewährt, bei dem in einem Verfahrensschritt die Leistung einer Pumpe in Abhängigkeit der Temperaturdaten eines im System vorgesehenen Temperatursensors geregelt wird. Insbesondere bei sehr tiefen Außentemperaturen kann durch eine temperaturabhängige Regelung der Pumpleistung vorteilhaft einer möglichen Verfestigung des Beschwerungsmaterial vorteilhaft entgegengewirkt werden. Ein, vorzugsweise im Verbindungselement angeordneter, Temperatursensor kann dazu Ist-Werte der Temperatur des Beschwerungsmaterials beim Ein- und/oder Ausfließen aus dem Schlauchsystem messen und an eine Steuereinrichtung der Pumpe weitergeben. Sinkt die Temperatur im Beschwerungsmaterial unter einen Soll-Wert ab, weil bspw. die Wärmeaufnahme des Beschwerungsmaterials während seines Aufenthalts im Materialreservoir nicht ausreicht, um eine Erwärmung auf Temperaturen oberhalb einer gewünschten Soll-Temperatur zu erreichen, kann durch Erhöhung der Pumpleistung und damit Erhöhung der Flussgeschwindigkeit des Beschwerungsmaterials im geschlossenen Umlaufsystem aus Schlauchsystem, Pumpe und Materialreservoir zusätzlich Energie in den Fluss des Beschwerungsmaterials eingebracht werden. Dadurch wird vorteilhaft die Verfestigung des Beschwerungsmaterials, insbesondere bei der Verwendung von (Regen-)Wasser als Beschwerungsmaterial eine Vereisung, verhindert.

Alternativ oder kumulativ dazu hat sich zudem bewährt, wenn in einem Verfahrensschritt die Leistung der Pumpe zeitgesteuert ist. Eine Zeitsteuerung ermöglicht es vorteilhaft, die Leistung der Pumpe beispielsweise in den kälteren Abend- und Nachstunden zu erhöhen und somit einen höheren Energieeintrag in das Beschwerungsmaterial zu ermöglichen, was einer Verfestigung des Beschwerungsmaterials vorteilhaft entgegenwirkt.

Schließlich ist eine Ausgestaltung des Verfahrens bevorzugt, bei der in einem Verfahrensschritt das Beschwerungsmaterial aus dem Materialreservoir aus einem Bereich des Materialreservoirs nahe der Erdoberfläche entnommen und zum Aufnahmeraum transportiert wird und in einem tieferliegenden Bereich des Materialreservoirs näher zum Erdinneren, dem Materialreservoir wieder zugeführt wird, nachdem es den Aufnahmeraum durchquert hat.

Das erfindungsgemäße System sowie das erfindungsgemäße Verfahren ermöglichen es vorteilhaft ein Silo, insbesondere ein Fahrsilo, einfach und schnell abzudecken und besagte Abdeckung zur Entnahme der Silage auch wieder einfach und schnell zu entfernen. Als Beschwerungsmaterial zur Beschwerung der Plane kann dabei vorteilhaft gewöhnliches Regenwasser eingesetzt werden, was ohne Zusätze zur Gefrierpunktserniedrigung auch bei kälteren Außentemperaturen verwendet werden kann, insbesondere auch bei Temperauren unter 0°C. Das erfindungsgemäße System und Verfahren ist dabei besonders energieeffizient und umweltschonend.

Diese sowie zusätzliche Einzelheiten und weitere Vorteile der Erfindung werden nachfolgend anhand bevorzugter Ausführungsbeispiele, auf welche die vorliegende Erfindung jedoch nicht beschränkt ist, und in Verbindung mit der beigefügten Zeichnung beschrieben.

Darin zeigen schematisch:
- Fig. 1: eine Ausgestaltung eines erfindungsgemäßen Systems zur Abdeckung einer Füllung eines Silos, insbesondere eines Fahrsilos, in einer Seitenansicht;
- Fig. 2: die Ausgestaltung des Systems aus Fig. 1 in einer Draufsicht;
- Fig. 3: in einer Schnittansicht eine Ausgestaltung eines Verbindungselements mit daran angeschlossenem Schlauchsystem, Zulaufschlauch und Rücklaufschlauch für das Beschwerungsmaterial;
- Fig. 4: eine Querschnittsansicht des Schlauchsystems aus Fig. 3;
- Fig. 5: eine Ausgestaltung eines, an ein Verbindungselement angeschlossenes, erfindungsgemäßes Schlauchsystems in einer Schnittseitenansicht;
- Fig. 6: eine weitere Ausgestaltung eines erfindungsgemäßen Systems zur Abdeckung einer Füllung eines Silos in einer Ausführung mit einem Mehrfach- (hier Zweifach-)silo in einer Draufsicht; und
- Fig. 7: in einer Seitenansicht einen Schnitt durch das in Fig. 6 obere Silo des Zweifachsilos aus Fig. 6.

Bei der nachfolgenden Beschreibung bevorzugter Ausführungsformen der vorliegenden Erfindung bezeichnen gleiche Bezugszeichen gleiche oder vergleichbare Komponenten.

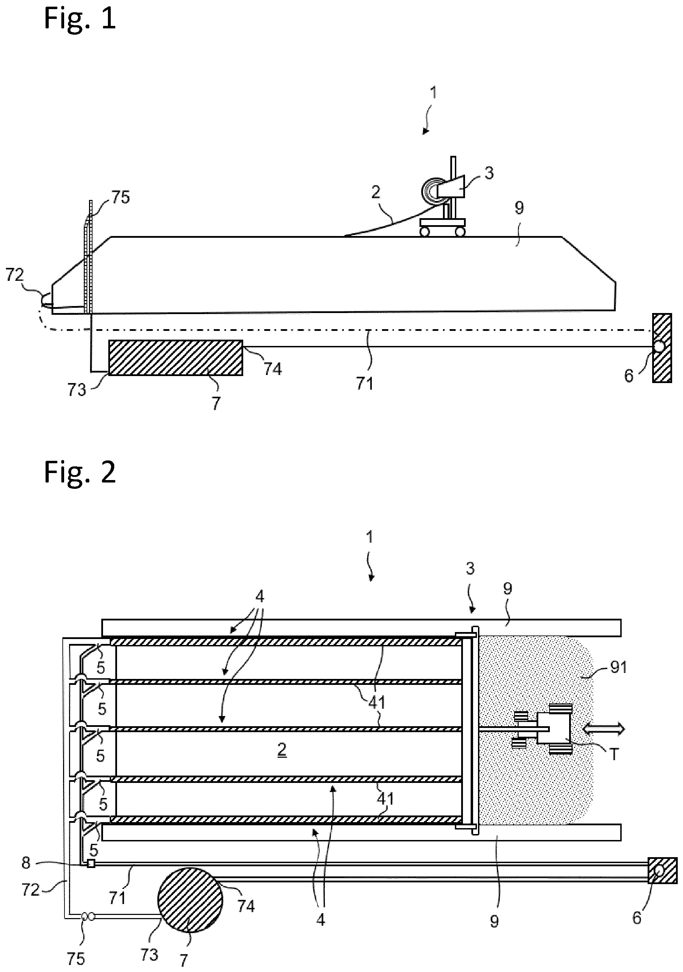

In Fig. 1 ist eine Ausgestaltung eines erfindungsgemäßen Systems 1 zur Abdeckung einer Füllung 91 eines Silos 9, insbesondere eines Fahrsilos, in einer Seitenansicht gezeigt.

Das erfindungsgemäße System 1 zur Abdeckung einer Füllung 91 eines Silos 9, insbesondere eines Fahrsilos, umfasst wenigstens eine flexible Plane 2 zum wasser- und/oder luftdichten Abdecken zumindest eines Teils der Füllung 91; eine Abrollvorrichtung 3, welche eingerichtet ist, die Plane 2 über die Füllung 91 hinweg ab- und aufzurollen; sowie wenigstens ein Aufnahmeraum 4 für ein Beschwerungsmaterial M zur Beschwerung der Plane 2. Die Plane 2 kann insbesondere aus gewöhnlichem Planenstoff oder bevorzugt aus Polyvinylchlorid (PVC), insbesondere in "Biogas-Qualität" wie bei Biogasanlagen verwendet, gefertigt sein. Zur Stromversorgung des Systems 1 können Stromleitungen zur Verbindung mit dem örtlichen Stromversorger vorgesehen sein. Alternativ oder kumulativ kann das System 1 auch bevorzugt über eine eigene Solaranlage ganz oder teilweise mit elektrischem Strom versorgt werden. Andere, insbesondere regenerative, Stromerzeugungsquellen wie insb. Wind- oder Wasserkraft sind ebenfalls denkbar.

Wie in der Draufsicht der Ausgestaltung des Systems 1 in Fig. 2 gezeigt, können über die Plane 2 hinweg mehrere Aufnahmeräume 4 vorgesehen sein, wobei die Aufnahmeräume 4 im inneren Bereich der Plane 2 vorzugsweise einen kleineren maximalen Gesamtdurchmesser aufweisen können, als die Aufnahmeräume 4 an den Rändern der Plane 2, also diejenigen, die zur weitgehend hermetischen Abdichtung mit den Seitenwänden des Silos 9 in Kontakt kommen. Der maximale Gesamtdurchmesser der Aufnahmeräume 4 am Rand der Plane 2, also der Durchmesser D eines Außenschlauchs 411 eines als Schlauchsystem 41 ausgebildeten Aufnahmeraums 4, kann insbesondere 300 mm bis 350 mm, bevorzugt 320 mm betragen. Der Gesamtdurchmesser der Aufnahmeräume 4 im inneren Bereich der Plane 2, also der Durchmesser D eines Außenschlauchs 411 eines als Schlauchsystem 41 ausgebildeten Aufnahmeraums 4, kann insbesondere 180 mm bis 220 mm, bevorzugt 200 mm betragen. Der oder die Aufnahmeräume 4, insbesondere die als Schlauchsysteme 41 ausgebildeten Aufnahmeräume 4, können aus einem flexiblen Kunststoff, insbesondere Polyvinylchlorid (PVC), oder aus flexiblem Gewebe-Verbundmaterial, wie es beispielsweise für Feuerwehrschläuche verwendet wird, gebildet sein.

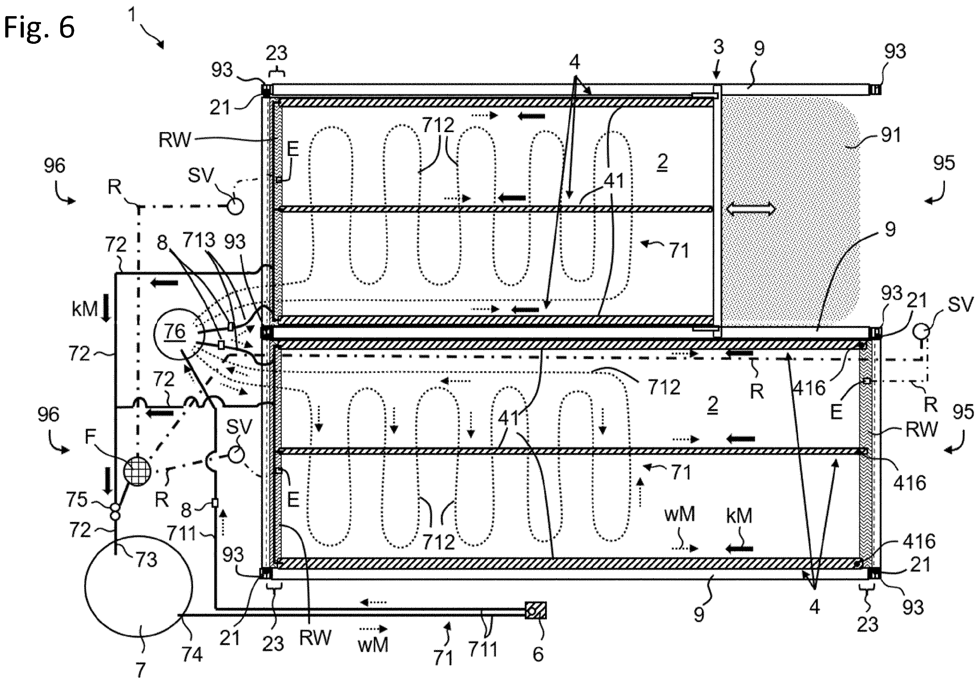

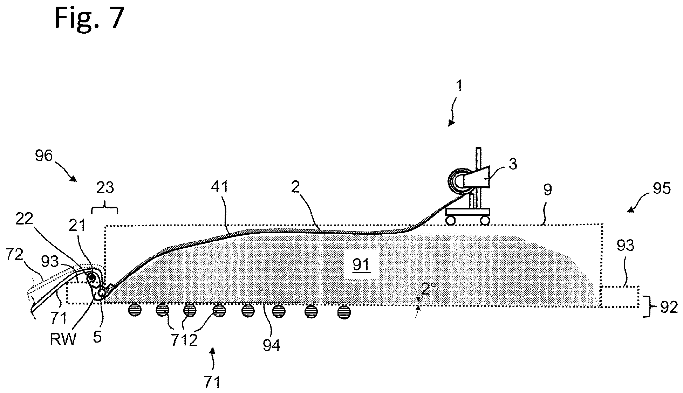

Ferner umfasst das erfindungsgemäße System 1 wenigstens ein Materialreservoir 7 für das Beschwerungsmaterial M und wenigstens eine Pumpe 6 zum Pumpen des Beschwerungsmaterials M über wenigstens einen Zulaufschlauch 71 vom Materialreservoir 7 in den Aufnahmeraum 4. Im Gegensatz zum Aufnahmeraum 4 kann es beim Zulaufschlauch 71 vorteilhaft sein, wenn dieser aus einem starren, formstabilen Material bzw. als Rohr ausgebildet ist. Als Beschwerungsmaterial M kann vorzugsweise eine Flüssigkeit, insbesondere Wasser, verwendet werden. Besonders bevorzugt kann als Beschwerungsmaterial M gewöhnliches Regenwasser verwendet werden, welches insbesondere in einer separaten Auffangvorrichtung gesammelt und dann dem Materialreservoir 7 zugeführt werden kann. Regenwasser, welches auf die Plane 2 fällt, kann zur Verwendung als Beschwerungsmaterial M zudem auch insbesondere an einer oder an beiden Querseiten der Plane 2 gesammelt und mit einem oder mehreren Überlaufschläuchen (vgl. Fig. 6 und 7) in eine Bodenröhre und dann in das Materialreservoir 7 geleitet werden. Vorteilhaft ist vor dem Materialreservoir 7 mindestens eine Filterung von Regenwasser RW vorgesehen. Dabei ist es besonders vorteilhaft, wenn die separate Auffangvorrichtung, die Querseiten und/oder der oder die Überlaufschläuche mit wenigstens einer Filtereinrichtung F in Wirkverbindung stehen, die das Regenwasser RW von etwaigen Verschmutzungen, wie Samen, Blättern oder kleinen Steinen befreit, bevor das Regenwasser RW in das Materialreservoir 7 eingetragen wird. Das Materialreservoir 7 wird dadurch vorteilhaft bei jedem Regen automatisch aufgefüllt, wobei überschüssiges Regenwasser RW über einen Überlauf in den Erdboden abgeleitet werden und dort versickern kann. Der Zulaufschlauch 71 kann insbesondere dazu eingerichtet sein, mit der Umgebung Wärme auszutauschen. Wenigstens ein Teil des Zulaufschlauches 71, insbesondere ein zweiter Zulaufabschnitt 712 des Zulaufschlauchs 71, kann zudem vorzugsweise innerhalb eines Bodenbereichs 92 des Silos 9 verlaufen und/oder in einen Boden 94 des Silos 9 integriert sein. Über seine Erstreckung hinweg im Bereich vom Materialreservoir 7 bis zur Pumpe 6 sowie von der Pumpe 6 zu dem oder den Aufnahmebereichen 4 kann ein derartiger Zulaufschlauch 71 vorteilhaft Wärme, insbesondere Erdwärme, aus der Umgebung aufnehmen und an das innerhalb des Zulaufschlauchs 71 befindliche Beschwerungsmaterial M übertragen. Verläuft der Zulaufschlauch 71 wenigstens teilweise innerhalb eines Bodenbereichs 92 des Silos 9 und/oder ist der Zulaufschlauch 71 in einen Boden 94 des Silos 9 integriert, kann zudem vorteilhaft die bei der Silierung entstehende Reaktionswärme über den Zulaufschlauch 71 an das Beschwerungsmaterial M übertragen werden. Der oder die Zulaufschläuche 71 können dazu, insbesondere in dem oder den innerhalb des Bodenbereichs 92 des Silos 9 verlaufenden Teilen bzw. in dem oder den in den Boden 94 des Silos 9 integrierten Teilen, verstärkt sein und/oder in Rohrabschnitte übergehen (nicht gezeigt). Besagte Rohrabschnitte können insbesondere aus Polyethylen (PE)- oder auch aus mineralverstärkten Polypropylen- (PP-MD) Rohren gebildet sein. Im Boden 94 des Silos 9 verlaufende Zulaufschläuche 71 können zudem vorzugsweise soweit in den Boden 94 eingelassen sein, so dass sie bevorzugt mit dem zur Silage gerichteten Boden 94 des Silos 9 flächig abschließen. Mit anderen Worten kann es vorteilhaft sein, wenn die Zulaufschläuche 71 nicht aus dem Boden 94 des Silos 9 nach oben herausragen, da dadurch die Befüllung bzw. Entnahme der Silage erschwert sein kann. Alternativ oder kumulativ können im Boden 94 des Silos 9 verlaufende und gegebenenfalls leicht herausragende Zulaufschläuche 71 auch mit einer Abdeckung bzw. einem Blech zur Silage hin abgedeckt sein, um insbesondere die Befüllung und Entnahme durch Entnahmefahrzeuge und/oder autonome -roboter vorteilhaft zu erleichtern.

Das Materialreservoir 7 kann, wie in Fig. 1 zu sehen, vorzugsweise als ein im Erdboden angeordneter Behälter ausgebildet sein, welcher eingerichtet ist, mit der Umgebung Wärme auszutauschen. Dazu kann das Materialreservoir 7 insbesondere aus einem wärmeleitfähigen Material wie bspw. Beton, Stahlbeton oder aus einem metallischen Werkstoff wie Edelstahl gebildet sein. Das Materialreservoir 7 kann zudem vorzugsweise als ein zylindrischer Behälter mit einer Höhe von 3,5 bis 4,5 m, bevorzugt 4,0 m, und einem Durchmesser von 2,5 bis 3, 5, bevorzugt 3,0 m, ausgestaltet sein. Alternativ oder kumulativ kann das Materialreservoir 7 dabei vorzugsweise derart im Erdboden angeordnet sein, dass es sich bis in eine Tiefe von 3,5 bis 5,5 m, bevorzugt 4,0 bis 5,0 m, unter die Erdoberfläche hinab erstreckt. Das Materialreservoir 7 kann zudem vorzugsweise einen Eintritt 73 für das vom Aufnahmeraum 4 zum Materialreservoir 7 fließende Beschwerungsmaterial M und einen Austritt 74 für das vom Materialreservoir 7 zum Aufnahmeraum 4 fließende Beschwerungsmaterial M umfassen, wobei der Eintritt 73 bezüglich des Erdbodens bevorzugt in einer größeren Tiefe liegt als der Austritt 74. Vergleichsweise kaltes Beschwerungsmaterial M, welches aus dem oder den Aufnahmeräumen 4 zum Materialreservoir 7 fließt, kann dadurch vorteilhaft im Bodenbereich in das Materialreservoir 7 über den Eintritt 73 eintreten, sich dort im Bodenbereich sammeln und bereits erwärmtes Beschwerungsmaterial M nach oben verdrängen. Der wärmste Teil des im Materialreservoir 7 befindlichen Beschwerungsmaterials M sammelt sich vorteilhaft im oberen Bereich des Materialreservoirs 7 und kann dort über den Austritt 74 das Materialreservoir 7 verlassen und mit Hilfe der Pumpe 6 wieder in den oder die Aufnahmeräume 4 transportiert werden.

Der wenigstens eine Aufnahmeraum 4 ist erfindungsgemäß als Schlauchsystem 41 mit einem Außenschlauch 411 und einem, im Inneren des Außenschlauchs 411 verlaufenden Innenschlauch 412 gebildet. Der Innenschlauch 412 umfasst zudem wenigstens eine Öffnung 4123, die das vom Innenschlauch 412 umschlossene Volumen mit dem vom Außenschlauch 411 umschlossenen Volumen verbindet. Sowohl der Innenschlauch 412 als auch der Außenschlauch 411 eines Schlauchsystems 41 sind vorzugsweise aus einem flexiblen Material, wie beispielsweise einem flexiblen Kunststoff oder aus einem flexiblen Gewebe-Verbundmaterial gebildet, wie es bspw. bei Feuerwehrschläuchen verwendet wird. Besonders bevorzugt ist bei allen Ausführungsformen die Verwendung von Polyvinylchlorid (PVC) in "Biogas-Qualität" als Schlauchmaterial.

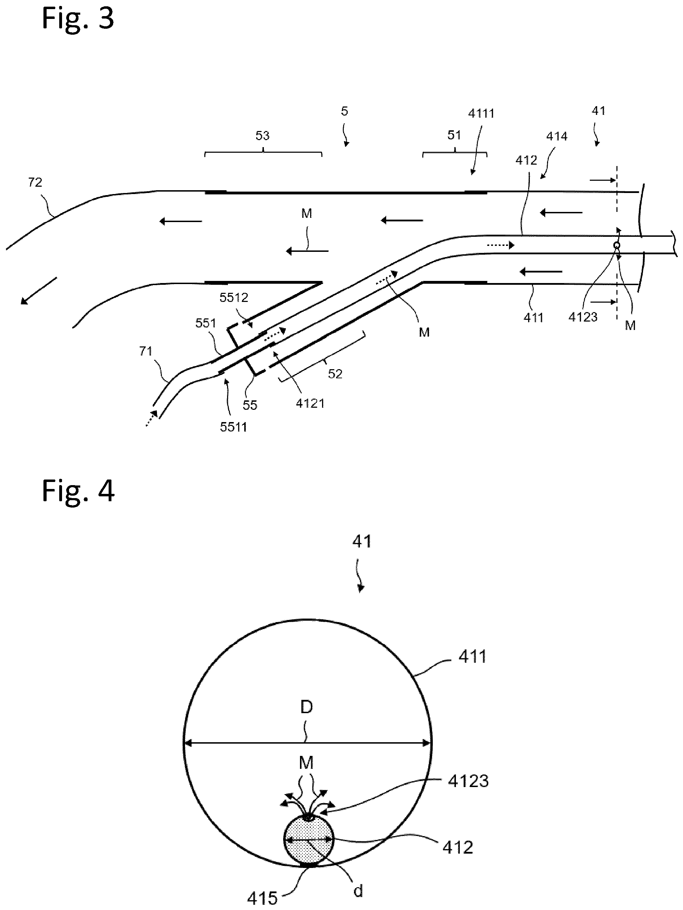

In den Fig. 3 bis 5 sind Ausgestaltungen eines derartigen Schlauchsystems 41 gezeigt.

In Fig. 3 ist in einer Schnittansicht eine Ausgestaltung eines Verbindungselements 5 mit daran angeschlossenem Schlauchsystem 41, Zulaufschlauch 71 und Rücklaufschlauch 72 für das Beschwerungsmaterial M dargestellt, Fig. 4 zeigt eine Querschnittsansicht des Schlauchsystems 41 aus Fig. 3. Der Schnitt erfolgt hier an der durch die mit einer gestrichelten Linie und mit Pfeilen markierten Stelle in Fig. 3.

Erfindungsgemäß verläuft der Innenschlauch 412 wie dargestellt im Inneren des Außenschlauchs 411 und kann einen Durchmesser d von insbesondere 30 mm bis 34 mm, bevorzugt 32 mm aufweisen. Der Innenschlauch 412 kann zudem über ein Verbindungsmittel 415 wenigstens abschnittsweise mit der Innenwand des Außenschlauchs 411 verbunden sein. Als Verbindungsmittel 415 kann dabei bevorzugt eine Kunststoffschweißnaht dienen, welche den Innenschlauch 412 mit dem Außenschlauch 411 wenigstens abschnittsweise fest verbindet, so dass sich der Innenschlauch 412 im Inneren des Außenschlauchs 411 während der Zirkulation des Beschwerungsmaterials M nicht unbeabsichtigt gegenüber dem Außenschlauch 411 bewegt. Besagte Verbindung zwischen Innenschlauch 412 und Außenschlauch 411 über das Verbindungsmittel 415 ist dabei bevorzugt bezüglich einer Länge L des Schlauchsystems 41 in einem mittleren Bereich gebildet, so dass insbesondere der Teil des Innenschlauchs 412, der dem Verbindungselement 5 nahe ist, unverbunden mit dem Außenschlauch 411 bleibt und mittels eines Führungsschlauchs zum Verbindungsmittel 5 geführt werden kann. Als Führungsschlauch kann hier ein vergleichsweise fester, aber dennoch beweglicher Gummischlauch dienen, in den der Innenschlauch 412 eingefädelt und zum Verbindungselement 5, insbesondere zu dessen zweitem Anschlussabschnitt 52 für den Innenschlauch 412 geführt wird.

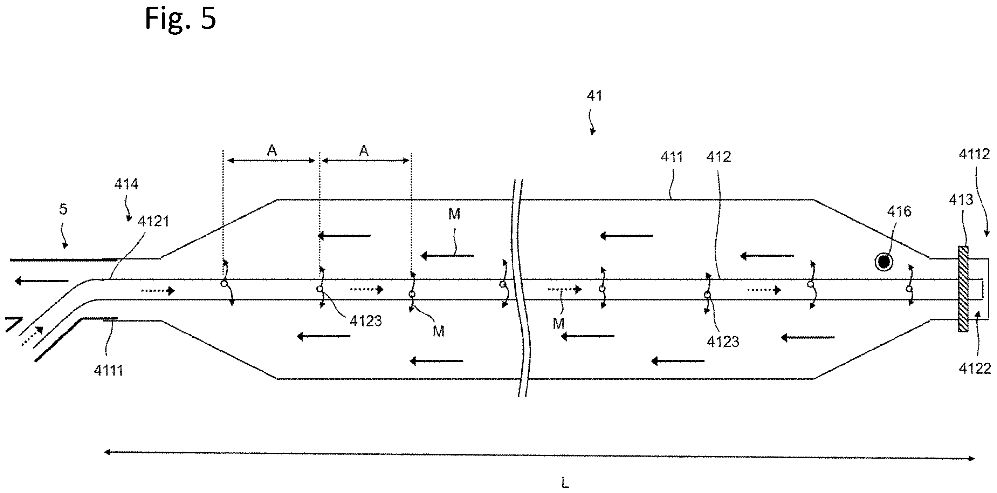

Fig. 5 zeigt eine Ausgestaltung eines, an ein Verbindungselement 5 angeschlossenes, erfindungsgemäßes Schlauchsystems 41 in einer Schnittseitenansicht.

Wie dargestellt, können am Innenschlauch 412 bevorzugt eine Vielzahl von Öffnungen 4123 angeordnet sein, wobei die Öffnungen 4123 vorzugsweise entlang der Längsachse des Innenschlauchs 412 zueinander derart beabstandet angeordnet sind, dass ein Abstand A zwischen den einzelnen Öffnungen 4123 in Richtung eines geschlossenen Endes 4122 des Innenschlauchs 412 zunimmt. In Fig. 5 ist dieses geschlossene Ende 4122 des Innenschlauchs 412, wie auch das geschlossene Ende 4112 des Außenschlauchs 411 und damit des Schlauchsystems 41 auf der rechten Seite abgebildet. Die geschlossenen Enden 4122 und 4112 können jeweils eigenständig abgeschlossen sein. Alternativ oder kumulativ kann auch ein Befestigungsmittel 413, insbesondere eine Klemme, verwendet werden, welches den Innenschlauch 412 mit dem Außenschlauch 411 verbindet und dabei die Enden beider Schläuche verschließt. Zur schnellen Entleerung kann der Außenschlauch 411, insbesondere im Bereich seines geschlossenen Endes 4112, einen Verschluss 416 aufweisen.

Bei einem Schlauchsystem 41 mit einer Länge L von beispielsweise 75 m, bei dem demnach sowohl der Außenschlauch 411 als auch der Innenschlauch 412 in vollständig abgerolltem Zustand wenigstens die besagte Länge L aufweisen, kann der Innenschlauch 412 von seinem offenen Ende 4121 bis zu einer Länge L von 45 m vorzugsweise alle 2 m eine Öffnung 4123 aufweisen, ab 45 m bis zu einer Länge L von 60 m kann vorzugsweise alle 2,5 m eine Öffnung 4123 vorgesehen sein und ab 60 m bis zum Ende des Schlauchsystems 41 bei einer Länge L von 75 m kann sich bevorzugt alle 3 m eine Öffnung 4123 am Innenschlauch 412 befinden. Der Abstand A wäre somit zunächst 2 m, dann 2,5m und schließlich 3 m zum geschlossenen Ende 4122 des Inneschlauchs 412 hin. Die Öffnungen 4123 selbst können Durchmesser im Bereich von 1,5 mm bis 3 mm, bevorzugt einen Durchmesser von 2 mm haben.

In Fig. 5 ist darüber hinaus gezeigt, dass die Öffnungen 4123 insbesondere zyklisch am Mantel des Innenschlauchs 412 angeordnet sein können, so dass sie bezüglich der Längsachse des Innenschlauchs 412 auf unterschiedlichen Parallelen zu dieser Längsachse liegen. Es ergibt sich dadurch vorteilhaft eine Verteilung der Öffnungen 4123 auf einer Art Wellenlinie um den Mantel des Innenschlauchs 412 herum, wodurch sich die Austrittsrichtung des Beschwerungsmaterials M aus dem Innenschlauch 412 in den Außenschlauch 411 über verschiedene Raumrichtungen verteilt.

Der Innenschlauch 412 und der Außenschlauch 411 sind erfindungsgemäß bevorzugt über ein Verbindungselement 5 derart mit der Pumpe 6 und dem Materialreservoir 7 wirkverbunden, dass für das Beschwerungsmaterial M ein geschlossenes Umlaufsystem aus Schlauchsystem 41, Pumpe 6 und Materialreservoir 7 gebildet ist. Das geschlossene Umlaufsystem aus Schlauchsystem 41, Pumpe 6 und Materialreservoir 7 lässt sich in Fig. 2 gut erkennen.

Fig. 3 zeigt eine Ausgestaltung des besagten Verbindungselements 5 genauer. Das Verbindungselement 5 kann insbesondere einen ersten Anschlussabschnitt 51 zur Wirkverbindung mit dem Außenschlauch 411 des Schlauchsystems 41, einen zweiten Anschlussabschnitt 52 zur Wirkverbindung mit dem Innenschlauch 412 des Schlauchsystems 41 und einen dritten Anschlussabschnitt 53 zur Wirkverbindung mit einem Rücklaufschlauch 72 zum Rücklauf des Beschwerungsmaterials M zum Materialreservoir 7 umfassen. Das Schlauchsystem 41 ist dabei vorzugsweise mit dem Verbindungselement 5 derart verbunden, dass der Außenschlauch 411 direkt mit dem ersten Anschlussabschnitt 51 verbindbar ist. Der Außenschlauch 411 kann beispielsweise, wie hier dargestellt, über den ersten Anschlussabschnitt 51 geschoben und somit daran befestigt werden. Auch eine Flanschverbindung zwischen Außenschlauch 411 und ersten Anschlussbereich 51 ist in einer bevorzugten Ausgestaltung möglich. Der Innenschlauch 412 kann vorzugsweise durch ein offenes Ende 4111 des Außenschlauchs 411 und das Innere des Verbindungselements 5 hindurch mit dem zweiten Anschlussabschnitt 52 verbindbar sein. Der zweite Anschlussabschnitt 52 kann dazu vorzugsweise von einem Deckel 55 nach außen hin dicht abgeschlossen sein, wobei der Deckel 55 wenigstens ein Durchgangsrohr 551 mit einem ersten, außerhalb des Verbindungselements 5 liegenden Ende 5511 und einem zweiten, innerhalb des Verbindungselements 5 liegenden Ende 5512 umfasst, so dass das Beschwerungsmaterial M vom Materialreservoir 7 durch das Durchgangsrohr 551 in das Innere des Verbindungselements 5, insbesondere in das Innere des Innenschlauchs 411, gelangen kann. Das offene Ende 4121 des Innenschlauchs 412 kann dann wiederum auf das zweite, innerhalb des Verbindungselements 5 liegende Ende 5512 des Durchgangsrohrs 551 geschoben und somit daran befestigt werden. Alternativ ist auch hier eine Flanschverbindung zwischen Innenschlauch 412 und Durchgangsrohr 551 möglich. Das erste, außerhalb des Verbindungselements 5 liegende Ende 5511 des Durchgangsrohrs 551 kann mit einem Zulaufschlauch 71 für das Beschwerungsmaterial M verbindbar sein. Auch hier kann die Verbindung wieder über ein Aufschieben des Schlauchendes oder eine Flanschverbindung erfolgen. Der Deckel 55 kann über eine Schraub- und/oder Steckverbindung mit dem zweiten Anschlussabschnitt 52 des Verbindungselements 5 verbindbar sein. Ebenfalls über ein Aufschieben oder eine Flanschverbindung kann schließlich der Rücklaufschlauch 72 zum Rücklauf des Beschwerungsmaterials M zum Materialreservoir 7 wie in Fig. 3 gezeigt mit dem dritten Anschlussabschnitt 53 des Verbindungselements 5 verbunden werden, sodass vorteilhaft ein geschlossenes Umlaufsystem aus Schlauchsystem 41, Pumpe 6 und Materialreservoir 7 gebildet werden kann. Wie in den Fig. 1 und 2 gezeigt, kann der Rücklaufschlauch 72 mit einem Füllsystem 75 verbunden sein, welches Leitungsabschnitte aufweist, die vorzugsweise höher über dem Erdboden als der oder die Aufnahmeräume 4 angeordnet sind. Ein derartiges Füllsystem 75, welches alternativ oder kumulativ auch mit dem Zulaufschlauch 71 verbunden sein kann, fungiert vorteilhaft als eine Art Überdruckventil und dient dem Druckausgleich bzw. der Druckeinstellung in dem oder den Aufnahmeräumen 4. Das Füllsystem 75 kann darüber hinaus zum schnellen Entleeren der Aufnahmeräume 4 einen Bodenhahn bzw. Bodenschieber umfassen (nicht gezeigt).

Darüber hinaus kann das System 1 zur Abdeckung einer Füllung 91 eines Silos 9, insbesondere eines Fahrsilos, wenigstens einen Temperatursensor 8 zur Messung der Temperatur des Beschwerungsmaterials M umfassen, wobei der Temperatursensor 8 vorzugsweise im Bereich des Verbindungselements 5 angeordnet ist. In Fig. 2 ist ein derartiger Temperatursensor 8 exemplarisch im Zulaufschlauch 71 kurz vor dem ersten Verbindungselement 5 angeordnet. Alternativ oder kumulativ kann ein derartiger Temperatursensor 8 auch Teil eines Verbindungselements 5 sein, insbesondere auch eines jeden Verbindungselements 5, je nachdem, wie viele Schlauchsysteme 41 mit jeweiligem Verbindungselement 5 innerhalb einer konkreten Ausgestaltung eines erfindungsgemäßen Systems 1 Verwendung finden. Der oder die Temperatursensoren 8 dienen der Messung der Ist-Temperatur des Beschwerungsmaterials M vor dem Eintritt in die Schlauchsysteme 41 bzw. das jeweilige Schlauchsystem 41.

Zur Abdeckung einer Füllung 91 eines Silos 9, insbesondere eines Fahrsilos, kann nun die Plane 2, insbesondere autonom oder mit Hilfe eines landwirtschaftlichen Fahrzeugs T, durch Abrollen von einer Abrollvorrichtung 3 über die Füllung 91 gelegt werden.

Für ein autonomes Abrollen kann beispielsweise auf eine Abrollvorrichtung zurückgegriffen werden, wie sie in der EP 3 967 131 A1 vom Anmelder bereits zuvor offenbart wurde, und auf deren Offenbarung vollumfänglich Bezug genommen wird. Diese Vorrichtung ist besonders für die Verwendung bei Mehrfachsilos mit gemeinsamen Innenwänden geeignet. Alternativ können auch andere automatische Abrollvorrichtungen Verwendung finden wie bspw. die in der EP 3 476 204 A1 beschriebene. Sie eignet sich insbesondere für die Verwendung mit Einzelsilos.

Wird für das Auf- und Abrollen der Plane 2 ein landwirtschaftliches Fahrzeug T eingesetzt, kann dieses dazu die Abrollvorrichtung 3 von einem Ende des Silos 9 zum anderen Ende Silos 9 ziehen (vgl. dazu Fig. 2). Zusammen mit der Plane 2 wird der wenigstens eine Aufnahmeraum 4 bzw. werden die Aufnahmeräume 4 von der Abrollvorrichtung 3 abgerollt. Der oder die Aufnahmeräume 4 können dazu fest mit der Oberfläche der Plane 2 verbunden sein, insbesondere über eine Kunststoffschweißnaht jeweils zwischen den als Schlauchsysteme 41 ausgebildeten Aufnahmeräumen 4 und der Oberseite der Plane 2. Befindet sich die Plane 2 dann in gewünschter Position auf der Füllung 91 des Silos 9, wird die Plane 2 erfindungsgemäß dadurch beschwert, dass ein Beschwerungsmaterial M innerhalb eines geschlossenen Umlaufsystems aus einem, an der Plane 2 angeordneten, als Schlauchsystem 41 mit einem Außenschlauch 411 und einem, im Inneren des Außenschlauchs 411 verlaufenden Innenschlauch 412 ausgebildeten, Aufnahmeraum 4, einer Pumpe 6 und einem Materialreservoir 7 kontinuierlich gepumpt wird. Die kontinuierliche Bewegung des Beschwerungsmaterials M verhindert vorteilhaft dessen Verfestigung bei tiefen Außentemperaturen, insb. unter 0°C. Als Pumpe 6 kann dazu insbesondere eine schwimmende Tauchpumpe Verwendung finden. Die Leistung der Pumpe 6 kann dabei bevorzugt in Abhängigkeit der Temperaturdaten eines im System 1 vorgesehenen Temperatursensors 8 geregelt werden, sodass die Fließgeschwindigkeit beispielsweise dann erhöht werden kann, wenn die Ist-Temperatur des durch das geschlossene Umlaufsystem fließende Beschwerungsmaterial M unterhalb einer Soll-Temperatur, insbesondere dem Gefrierpunkt des Beschwerungsmaterials M, liegt. Dies verhindert vorteilhaft eine Verfestigung des Beschwerungsmaterials M in den Aufnahmeräumen 4. Zudem kann die Leistung der Pumpe 8 auch über eine Zeitsteuerung geregelt werden, sodass beispielsweise eine Leistungserhöhung in den kälteren Abend- und Nachstunden einen höheren Energieeintrag in das Beschwerungsmaterial M ermöglicht und wiederum einer Verfestigung vorteilhaft entgegenwirkt.

Das Beschwerungsmaterial M fließt somit entsprechend dem erfindungsgemäßen Verfahren kontinuierlich vom Materialreservoir 7 zu dem oder den Aufnahmeräumen 4 und wieder zurück. Das Beschwerungsmaterial M kann dabei vorzugsweise aus dem Materialreservoir 7 aus einem Bereich des Materialreservoirs 7 nahe der Erdoberfläche entnommen und zum Aufnahmeraum 4 transportiert werden und in einem tieferliegenden Bereich des Materialreservoirs 7 näher zum Erdinneren, dem Materialreservoir 7 wieder zugeführt werden, nachdem es den Aufnahmeraum 4 durchquert hat. Während seiner Zeit im Materialreservoir 7 kann das Beschwerungsmaterial M Umgebungswärme, insbesondere Erdwärme, aufnehmen und mit erhöhter Temperatur wieder über den Zulaufschlauch 71 dem oder den Aufnahmeräumen 4 zugeführt werden. Die Energieaufnahme über Erdwärme verläuft hierbei passiv, d.h. es wird hierfür keine weitere Energiequelle des Systems 1 benötigt, was die Energieeffizienz des Verfahrens vorteilhaft erhöht. Insbesondere können Abschnitte des Rücklaufschlauch 72 zur Energieaufnahme durch das Beschwerungsmaterial M einfach oder mehrfach um das Materialreservoir 7 herumgeführt sein (nicht dargestellt), bevor das Beschwerungsmaterial M dem Materialreservoir 7 zugeführt wird. Alternativ oder kumulativ kann eine Energieaufnahme durch das Beschwerungsmaterial M auch vorteilhaft dadurch erfolgen, das Beschwerungsmaterial M vorzugsweise vor dem Eintritt in den oder die Aufnahmeräume 4, durch wenigstens einen Zulaufschlauch 71 fließt, welcher wenigstens teilweise innerhalb eines Bodenbereichs des Silos 9 verläuft und/oder in den Boden des Silos 9 integriert ist. Die bei der Silierung entstehende Reaktionswärme kann dabei vorteilhaft über den Zulaufschlauch 71 an das Beschwerungsmaterial M übertragen werden.

Soll Silage aus dem Silo 9 entnommen und die Plane 2 deshalb wieder mittels der Aufrollvorrichtung 3 aufgerollt werden, kann die kontinuierliche Umlaufbewegung des Beschwerungsmaterials M durch Stoppen der Pumpe 6 beendet werden. Zum Aufrollen der Plane 2 mitsamt des oder der flexiblen Aufnahmeräume 4 kann wiederum ein landwirtschaftliches Fahrzeug T die Aufrollvorrichtung 3 in entgegengesetzter Richtung über das Silo 9 hinwegbewegen. Bei Ausstattung der Aufrollvorrichtung 3 mit einem eigenen Antrieb kann diese auch autonom über das Silo 9 hinwegbewegt werden. Während des Aufrollens kann Beschwerungsmaterial M aus dem oder den Aufnahmeräumen 4 herausgedrückt werden und insbesondere über den Rücklaufschlauch 72 in das Materialreservoir 7 fließen. Die Plane 2 samt dem dann leeren oder den dann leeren Aufnahmeräumen 4 lässt sich vorteilhaft kompakt aufrollen und bis zur nächsten Benutzung lagern und weist zudem, da das Beschwerungsmaterial M entfernt wurde, vorteilhaft ein vergleichsweise geringes Gewicht auf.

Fig. 6 zeigt eine weitere Ausgestaltung eines erfindungsgemäßen Systems 1 zur Abdeckung einer Füllung 91 eines Silos 9 in einer Ausführung mit einem Mehrfach (hier Zweifach-)silo in einer Draufsicht.

Unter einem Mehrfachsilo wird eine Siloanlage verstanden, bei der mehrere Silos 9, insbesondere mindestens zwei Silos 9 wie hier gezeigt, einander benachbart angeordnet sind. Im vorliegenden Beispiel teilen sich die beiden Silos 9 die mittlere Silowand, in anderen Ausführungsformen können die einander benachbarten Silos 9 auch jeweils zwei eigene Silowände aufweisen und voneinander durch einen Spalt bzw. Graben getrennt sein. Die Aufrollvorrichtung 3 kann entsprechend, wie hier gezeigt und in der EP 3 967 131 A1 des Anmelders vorgesehen, auf den Silowänden bewegbar sein. Die Abrollvorrichtung 3 kann jedoch auch wie in der EP 3 476 204 A1 beschrieben jeweils außen neben den Silowänden entlang bewegbar ausgebildet sein und sich somit im Fall der durch einen Spalt bzw. Graben getrennten Silos 9 in besagtem Spalt bzw. Graben bewegen.

Die Funktionsweise der Beschwerung der Plane 2 durch das Beschwerungsmaterial M, insbesondere Wasser bzw. gewöhnliches Regenwasser RW, in einem als Schlauchsystem 41 ausgebildeten Aufnahmeraum 4 erfolgt analog zu der zuvor beschriebenen Ausführungsform.

Zum Betrieb des Systems 1 ist in dieser Ausführungsform allerdings insbesondere ein Steuerungsschacht 76 vorgesehen, in welchem verschiedene Abschnitte 711, 712 und 713 des Zulaufschlauchs 71 für das Beschwerungsmaterial M zusammenlaufen und manuell über ein Umstecken einzelner Schlauchenden und/oder automatisch über ventilgesteuerte Schlauchverbinder, insbesondere T-Stücke und Ähnliches, je nach gewünschtem Betriebsablauf gekoppelt oder voneinander getrennt werden können. Rohr- bzw. Schlauchenden, sowie Schlauchverbinder, welche nicht im Erdboden vergraben oder durch Silage bedeckt sind, insbesondere diejenigen im Steuerungsschacht 76, sind dabei vorzugsweise gegen Wärmeverlust isoliert. Der Zulaufschlauch 71 kann vorzugsweise einen ersten Zulaufabschnitt 711 aufweisen, welcher vom Materialreservoir 7 über die Pumpe 6 zu dem Steuerungsschacht 76 verläuft. Dieser erste Zulaufabschnitt 711 leitet das Beschwerungsmaterial M durch den Erdboden, wobei der Zulaufschlauch 71, welcher vorzugsweise eingerichtet ist, mit der Umgebung Wärme auszutauschen, Erdwärme aus dem Erdboden aufnimmt und an das Beschwerungsmaterial M überträgt. Der Zulaufschlauch 71 kann zudem wenigstens einen zweiten Zulaufabschnitt 712 aufweisen, welcher vom Steuerungsschacht 76 aus innerhalb eines Bodenbereichs 92 des Silos 9 und dann wieder zurück in den Steuerungsschacht 76 verläuft. Wenigstens ein Teil des Zulaufschlauchs 71 des zweiten Zulaufabschnittes 712 kann dabei vorzugsweise in einen Boden 94 des Silos 9 integriert sein. In Fig. 6 sind zwei derartige zweite Zulaufabschnitte 712 des Zulaufschlauchs 71 als gestrichelte, mäandernd in den Bodenbereichen 92 der beiden benachbarten Silos 9 verlaufende Linien angedeutet. Die Mäanderform verlängert die Verlaufsstrecke im Bodenbereich 92 der jeweiligen Silos 9 und erhöht somit die im Bereich der Füllung 91 verlaufenden Oberfläche des Zulaufschlauchs 71, welche mit besagter Füllung 91 in Kontakt kommen kann. Eine Wärmeübertragung der Silierungswärme auf das Beschwerungsmaterial M wird dadurch vorteilhaft erhöht.

**Fig. 7** zeigt hierzu in einer Seitenansicht einen Schnitt durch das in Fig. 6 obere Silo 9 des Zweifachsilos.

In Fig. 7 ist der Verlauf des zweiten Zulaufabschnitts 712 im Bodenbereich 92, insbesondere integriert in den Boden 94, exemplarisch dargestellt. Der Bodenbereich 92 von Silos 9, insbesondere von Fahrsilos, weist zumeist vorzugsweise ein Gefälle von 1 bis 3 %, wie dargestellt vorzugsweise 2 %, in Richtung einer Entnahmeseite 95 auf, welches gewährleistet, dass sog. Sickersäfte, also Abwässer, die bei der Silierung entstehen, an der Entnahmeseite 95 gesammelt und gesondert entsorgt werden können (vgl. Fig. 7). Sowohl in Fig. 7 als auch in Fig. 6 ist zu sehen, dass sich der zweite Zulaufabschnitt 712 innerhalb des jeweiligen Bodenbereichs 92 bevorzugt nur jeweils von einer Rückseite 96 des Silos 9 bis ungefähr zur Mitte des jeweiligen Silos 9 erstreckt. Die zweite Hälfte des Bodenbereichs 92 des Silos 9 hin zur Entnahmeseite 95 bleibt hierbei frei. Eine derartige Ausgestaltung des zweiten Zulaufabschnitts 712 hat den Vorteil, dass auch dann, wenn ein Silo 9 für Fütterungszwecke nach und nach entleert wird, die Oberfläche des zweiten Zulaufabschnitts 712 des Zulaufschlauchs 71 möglichst lange mit der Füllung 91 in Kontakt bleiben und Wärme austauschen kann. Freiliegende, sich dann schneller abkühlende Bereiche des Zulaufschlauchs 71, wie sie entstehen würden, wenn der gesamte Bodenbereich 92 von dem zweiten Zulaufabschnitt 712 durchzogen werden würde, werden so vorteilhaft vermieden.

Nachdem das Beschwerungsmaterials M durch besagten zweiten Zulaufabschnitt 712 geflossen ist und sich dabei vorteilhaft weiter erwärmt und nicht abgekühlt hat, kann es zurück in den Steuerungsschacht 76 geleitet werden. In Fig, 6 ist gezeigt, dass im Steuerungsschacht 76 dann - wiederum manuell und/oder automatisch - eine Verteilung des Beschwerungsmaterials M über einen oder mehrere dritte Zulaufabschnitte 713 und jeweils daran angeschlossene Verbindungselemente 5 auf die Aufnahmeräume 4 der einzelnen Planen 2 erfolgen kann. Insbesondere bei Mehrfachsilos kann mit Hilfe des erfindungsgemäßen Systems 1 in dieser Ausgestaltung mit zweiten Zulaufabschnitten 712 vorteilhaft ausgewählt werden, ob und wenn ja durch welche zweiten Zulaufabschnitte 712 das Beschwerungsmaterial M fließt, bevor es in den oder die Aufnahmeräume 4 geleitet wird. Besagte Auswahl kann wiederum manuell oder automatisch mittels des Steuerungsschachts 76 erfolgen.

Im hier gezeigten Beispiel bestehen die Aufnahmeräume 4 jeweils aus drei Schlauchsystemen 41, zwei den jeweiligen Rand der Plane 2 zu den Wänden des Silos 9 abdichtende Schlauchsystem 41 mit größerem Durchmesser D des Außenschlauchs 411 und ein in der Mitte der jeweiligen Plane 2 verlaufendes Schlauchsystem 41 mit kleinerem Durchmesser D des Außenschlauchs 411. Der maximale Gesamtdurchmesser der Aufnahmeräume 4 am Rand der Plane 2, also der Durchmesser D eines Außenschlauchs 411 eines als Schlauchsystem 41 ausgebildeten Aufnahmeraums 4, kann wie bei der zuvor beschriebenen Ausführungsform insbesondere 300 mm bis 350 mm, bevorzugt 320 mm betragen. Der Gesamtdurchmesser der Aufnahmeräume 4 im inneren Bereich der Plane 2, also der Durchmesser D eines Außenschlauchs 411 eines als Schlauchsystem 41 ausgebildeten Aufnahmeraums 4, kann insbesondere 180 mm bis 220 mm, bevorzugt 200 mm betragen.

In Fig. 6 ist ein möglicher Verlauf des Stroms von Beschwerungsmaterial M durch die verschiedenen Leitungen (Schlauchsysteme 41, Zulaufschlauch 71, Rücklaufschlauch 72) als kleine Pfeile neben den jeweiligen Leitungen eingezeichnet. Vollständige, etwas dickere Pfeile stellen dabei einen kälteren Strom kM und gestrichelte Pfeile einen wärmeren Strom wM von Beschwerungsmaterial M dar (die Kennzeichnung mit vollständigen und gestrichelten Pfeilen entspricht derjenigen in Fig. 3 und 5). Erfindungsgemäß ist auch in dieser Ausgestaltung für das Beschwerungsmaterial M ein geschlossenes Umlaufsystem aus Schlauchsystem 41, Pumpe 6 und Materialreservoir 7 gebildet, wobei der Zulaufschlauch 71 nun um einen oder mehrere zweite Zulaufabschnitte 712 erweitert werden kann, um vorteilhaft möglichst viel Wärme, welche beim Silierungsprozess entsteht, dem Beschwerungsmaterial M, insbesondere dem Wasser bzw. dem gewöhnlichen Regenwasser RW, zuzuführen und als warmer Strom wM durch die Aufnahmeräume 4 zu leiten. Über die Rücklaufschläuche 72, welche wie in Fig. 3 beschrieben, mit den Verbindungselementen 5 verbunden sind, wird der abgekühlte "kalte Strom" kM des Beschwerungsmaterials M dann schließlich dem Materialreservoir 7 zugeführt und der Kreislauf beginnt von neuem. Die Temperatur des Beschwerungsmaterials M kann wiederum mittels Temperatursensoren 8 gemessen und die erhaltenen Temperaturdaten zur Steuerung der Pumpe 6 verwendet werden (vgl. auch Beschreibung zu Fig. 2 und 3). Um Wärmeverluste des Beschwerungsmaterials M zu vermeiden, können alle Zuleitungen (Abschnitte des Zulaufschlauchs 71; wie insbesondere der dritte Zulaufabschnitt 713, Schlauchverbinder, Flanschverbindungen und Ähnliches), welche nicht im Erdboden oder unterhalb der Füllung 91 (Silage) verlaufen, bevorzugt isoliert ausgebildet sein. Insbesondere Zuleitungen mit kleinerem Durchmesser, bspw. Zuleitungen mit einem Durchmesser von 32 mm, können hierbei isoliert sein, um einen Wärmeverlust und damit bei extremen Außentemperaturen auch eine Vereisung vorteilhaft zu verhindern.

Die in Fig. 6 dargestellt Ausführungsform bietet darüber hinaus noch die Möglichkeit Regenwasser RW, welches insbesondere auf die Plane 2 fällt, zu sammeln und dem Materialreservoir 7 als Beschwerungsmaterial M zuzuführen, um insbesondere eine etwaige Verdunstung von Beschwerungsmaterial M auszugleichen. Dazu umfasst das System 1 in dieser Ausgestaltung bevorzugt wenigstens eine Sammelvorrichtung SV für Regenwasser RW, welche eingerichtet ist, Regenwasser RW, welches sich in wenigstens einem Sammelbereich 23 auf der Plane 2 sammelt, aufzunehmen und, vorzugsweise über wenigstens eine Filtervorrichtung F, dem Materialreservoir 7 als Beschwerungsmaterial M zuzuführen. Das in Fig. 6 dargestellte Beispiel umfasst drei Sammelvorrichtungen SV, zwei jeweils an den Rückseite 96 des benachbarten Silos 9 und eine mittig zwischen den beiden Silos 9 an deren Entnahmeseite 95. Andere Anordnungen und/oder eine andere Anzahl an Sammelvorrichtungen SV sind ebenso möglich. Mehrfachsilos wie das in Fig. 6 dargestellte, werden gewöhnlich so betrieben, dass aus einem der Silos 9 nach und nach Silage zur Fütterung entnommen wird, bis dieses vollständig entleert ist. In Fig. 6 entspricht dies dem oberen Silo 9, auf dessen Silowänden eine Aufrollvorrichtung 3 angeordnet ist. Das oder die benachbarten Silos 9 bleiben während dieser Zeit vollständig abgedeckt, um die Füllung 91 möglichst luftdicht zu lagern und dadurch den Silierungsprozess in Gang zu setzen bzw. aufrecht zu erhalten und Fäulnisprozess zu vermeiden. In Fig. 6 ist dies im unteren Silo 9 dargestellt.

Die Plane 2, welche mittels der Aufrollvorrichtung 3 auf die Füllung 91 gelegt wird, kann an ihren Querseiten jeweils ein Schlaufe 22 zur Aufnahme eines Befestigungsrohrs 21 aufweisen. In Fig. 7 ist am linken Bildrand eine derartige Schlaufe 22 abgebildet. Während das Auf- und Abrollvorgangs der Plane 2 bleibt die Schlaufe 22 bzw. bleiben die Schlaufen 22 vorzugsweise leer und die Plane 2 somit vollständig flexibel. Nach dem Ablegen der Plane 2 auf der Füllung 91 kann durch besagte Schlaufe 22 dann ein Befestigungsrohr 21 geschoben werden, welches die jeweilige Querseite verstärkt. Als Befestigungsrohre 21 können insbesondere verzinkte Stahlrohre mit einem Durchmesser von ungefähr 8 cm Verwendung finden. Das Befestigungsrohr 21 kann zudem als einstückiges Rohr oder aber als zusammensteckbares Rohr aus einzelnen Rohrteilen gebildet sein, insbesondere aus einem ersten Rohr mit einer die Breite des Silos 9 beispielsweise zu 90 % abdeckender Erstreckung, auf welches an einem oder beiden Enden ein kurzes Ergänzungsrohrstück aufgesteckt wird, so dass sich eine Gesamterstreckung von etwas mehr als die gesamte Silobreite ergibt.

In Fig. 7 ist ein derartiges Befestigungsrohr 21 innerhalb einer Schlaufe 22 in einer Schnittansicht auf der im Bild linken Seite der Plane 2 gezeigt. Entsprechend kann auch nach erfolgtem vollständigem Abrollen der Plane 2 auf der im Bild rechten Seite ein Befestigungsrohr 21 an der Plane 2 befestigt werden. Diese Situation ist in Fig. 6 beim unteren Silo 9 dargestellt, bei dem an beiden Querseiten der Plane 2 die jeweiligen Enden der Befestigungsrohre 21 zu sehen sind. Besagte Befestigungsrohre 21 können einerseits der Verstärkung und Beschwerung der Querseiten der Plane 2 dienen. Andererseits ermöglichen die Befestigungsrohre 21 es auch, die Querseiten der Plane 2 erhöht auf den Enden 93 der Wand des Silos 9 zu lagern und dadurch jeweils eine Art Mulde zu bilden, welche als Sammelbereich 23 für Regenwasser RW dienen kann. Besagte Sammelbereiche 23 werden dann insbesondere durch die Plane 2 sowie durch die Enden 93 der Wände des Silos 9 gebildet, was eine einfache wie zuverlässige Abdichtung der Silage am Siloende zum Vorteil hat. In Fig. 6 sind derartige Sammelbereiche 23 durch eine Wellenschraffierung angedeutet. Auf der linken Seite von Fig. 7 ist zudem ein Schnitt durch einen Sammelbereich 23 zu sehen. Zur Lagerung auf den Enden 93 der Wände des Silos 9 werden die Befestigungsrohre 21 vorzugsweise länger als die Breite der Plane 2 gewählt, sodass die Enden der Befestigungsrohre 21 über die Plane 2 hinausstehen und auf den Enden 93 der Wände des Silos 9 abgelegt werden können. Die Enden 93 der Wände des Silos 9 sind dazu vorzugsweise niedriger ausgebildet als die Wände des Silos 9 in dessen Mittelbereich (vgl. Fig. 7 - Wand des Silos 9 ist gestrichelt dargestellt).

Regenwasser RW, welches auf die Plane 2 fällt, läuft der Schwerkraft folgend auf der Oberfläche der Plane 2 herab in einen der beiden Sammelbereiche 23 auf der linken bzw. rechten Querseite der Plane 2. Alternativ können die Sammelbereiche 23 auch über eine externe Wasserleitung befüllt werden. Innerhalb der Sammelbereiche 23 drückt das Regenwasser RW die Plane 2 auf den Boden 94 des Silos 9 und verstärkt dadurch vorteilhaft die Abdichtung der Füllung 91 mittels der Plane 2 an der Rückseite 96 sowie, im Fall eines vollständig abgedeckten Silos 9 (unteres Silo 9 in Fig. 6), auch an dessen Entnahmeseite 95. Über eine Entnahmevorrichtung E, wie beispielsweise eine Pumpe und/oder ein Überlaufrohr, kann Regenwasser RW bei Bedarf aus dem Sammelbereich 23 entnommen und in eine der Sammelvorrichtungen SV überführt werden. Besagte Sammelvorrichtungen SV können insbesondere über Regenwasserleitungen R mit dem Materialreservoir 7 verbunden sein, wobei die Regenwasserleitung R besonders bevorzugt wenigsten eine Filtervorrichtung F umfasst.

In Fig. 6 sind drei Regenwasserleitungen R als Strichpunktlinien eingezeichnet. Besagte Regenwasserleitungen R, die vorzugsweise aus dem gleichen Material wie der Zulauf- 71 und/oder der Rücklaufschlauch 72 gebildet sind, können insbesondere im Erdboden verlaufen. Im hier dargestellten Beispiel laufen alle drei Regenwasserleitungen R in einer Filtervorrichtung F zusammen, welche das Regenwasser RW, das Blätter, Samen oder kleine Steinchen mitführen kann, filtriert, bevor es in das Materialreservoir 7 eingeleitet wird. Als Filtervorrichtung F kann insbesondere ein Filterschacht mit einer Höhe von beispielsweise 60 cm und einem Durchmesser von ebenfalls 60 cm dienen, welcher mit Sickersteinen, Splitt und/oder Kies gefüllt ist. Alternativ oder kumulativ kann die Filtervorrichtung F auch wenigstens ein Sieb umfassen. Wie in Fig. 6 gezeigt, kann die Filtervorrichtung F mit dem Füllsystem 75 verbunden sein und darüber das filtrierte Regenwasser RW dem Materialreservoir 7 zuführen. Zwischen der Filtervorrichtung F und dem Materialreservoir 7 kann aber auch - alternative oder kumulativ - eine direkte Verbindung zur Einspeisung des filtrierten Regenwassers RW bestehen (hier nicht dargestellt).

Das erfindungsgemäße System 1 zur Abdeckung einer Füllung 91 eines Silos 9, insbesondere eines Fahrsilos, kann eine Kommunikations- und Steuervorrichtung umfassen, mittels derer das erfindungsgemäße System 1 mit einem Entnahmefahrzeug oder Entnahmeroboter kommunizieren kann und beispielsweise die Plane 2 mittels der Aufrollvorrichtung 3 gerade soweit öffnet, wie das Entnahmefahrzeug bzw. der Entnahmeroboter Füllung 91 aus dem Silo 9 entnehmen will. Um die Füllung 91 insbesondere bei einem derartigen automatisierten Entnahmevorgang möglichst weit bis zur Aufrollvorrichtung 3 hin mit Plane 2 bedeckt zu halten kann schließlich ein vorzugsweise mit Salzlauge oder einem Wasser-Glykol-Gemisch gefüllter, geschlossener Schlauch vorgesehen sein (nicht dargestellt), welcher quer zur Längsachse der Plane 2 auf die Plane 2 gelegt wird, die Plane 2 im Bereich kurz hinter der Abrollvorrichtung 3 gegen die Füllung 91 drückt und während des Aufrollvorgangs durch die Bewegung der Plane 2 langsam zur Rückseite 96 des jeweiligen Silos 9 mit rollt.

Die vorliegende Erfindung betrifft ein System 1 und Verfahren zur Abdeckung einer Füllung 91 eines Silos 9, insbesondere eines Fahrsilos. Sie zeichnet sich dadurch aus, dass eine flexible Plane 2 dadurch beschwert wird, dass ein Beschwerungsmaterial M innerhalb eines geschlossenen Umlaufsystems aus einem, an der Plane 2 angeordneten, als Schlauchsystem 41 mit einem Außenschlauch 411 und einem, im Inneren des Außenschlauchs 411 verlaufenden Innenschlauch 412 ausgebildeten, Aufnahmeraum 4, einer Pumpe 6 und einem Materialreservoir 7, insbesondere temperatur- und/oder zeitabhängig, kontinuierlich gepumpt wird. Das erfindungsgemäße System 1 und Verfahren ermöglichen es vorteilhaft ein Silo 9, insbesondere ein Fahrsilo, einfach und schnell, ggf. auch autonom, abzudecken und besagte Abdeckung zur Entnahme der Silage auch wieder einfach und schnell zu entfernen. Als Beschwerungsmaterial M zur Beschwerung der Plane 2 kann dabei vorteilhaft gewöhnliches Regenwasser eingesetzt werden, was ohne Zusätze zur Gefrierpunktserniedrigung auch bei kälteren Außentemperaturen verwendet werden kann. Das erfindungsgemäße System 1 und Verfahren ist dabei besonders energieeffizient und umweltschonend.

### Bezugszeichenliste

- 1: System zur Abdeckung eines Silos (9)
- 2: Plane
- 21: Befestigungsrohr
- 22: Schlaufe für Befestigungsrohr (21)
- 23: Sammelbereich für Regenwasser (RW)

- 3: Abrollvorrichtung zum Auf- und Abrollen der Plane (2)

- 4: Aufnahmeraum
- 41: Schlauchsystem
411 Außenschlauch
4111 offenes Ende
4112 geschlossenes Ende
412 Innenschlauch
4121 offenes Ende
4122 geschlossenes Ende
4123 Öffnung
413 Befestigungsmittel (für Innen- und Außenschlauch - Klemme)
414 offenes Ende des Schlauchsystems (41)
415 Verbindungsmittel
416 Verschluss
- 5: Verbindungselement
- 51: erster Anschlussabschnitt für den Außenschlauch (411)
- 52: zweiter Anschlussabschnitt für den Innenschlauch (412)
- 53: dritter Anschlussabschnitt für den Rücklaufschlauch (72)

- 55: Deckel, insb. Schraubdeckel
551 Durchgangsrohr
5511 erstes, außenliegendes Ende (Ende zum Materialreservoir 7 hin)
5512 zweites, innenliegendes Ende (Ende in das Verbindungselement 5 hinein)

- 6: Pumpe

- 7: Materialreservoir
- 71: Zulaufschlauch für das Beschwerungsmaterial (M)
- 711: erster Abschnitt des Zulaufschlauchs (71) (Materialreservoir (7) - Pumpe (6) - Steuerungsschacht (76))
- 712: zweiter Abschnitt des Zulaufschlauchs (71) (Steuerungsschacht (76) - Bodenbereich (92) des Silos (9) - Steuerungsschacht (76))
- 713: dritter Abschnitt des Zulaufschlauchs (71) (Steuerungsschacht (76) - Verbindungselement (5))
- 72: Rücklaufschlauch für das Beschwerungsmaterial (M)
- 73: Eintritt
- 74: Austritt
- 75: Füllsystem
- 76: Steuerungsschacht

- 8: Temperatursensor

- 9: Silo
- 91: Füllung
- 92: Bodenbereich des Silos (9)
- 93: Ende der Wand des Silos (9)
- 94: Boden des Silos (9)
- 95: Entnahmeseite
- 96: Rückseite

- R: Regenwasserleitung
- SV: Sammelvorrichtung für das Regenwasser (RW)
- E: Entnahmevorrichtung, um Regenwasser (RW) aus dem Sammelbereich (23) in Regenwasserleitungen (R) zur Filtervorrichtung (F) zu überführen
- F: Filtervorrichtung

- T: Landwirtschaftliches Fahrzeug
- M: Beschwerungsmaterial
- kM: kalter Strom von Beschwerungsmaterial (M)
- wM: warmer Strom von Beschwerungsmaterial (M)
- D: Durchmesser des Außenschlauchs (411)
- d: Durchmesser des Innenschlauchs (412)

- L: Länge des Schlauchsystems (41)
- A: Abstand zwischen den Öffnungen (4123)
- RW: Regenwasser

## Patentansprüche

1. System (1) zur Abdeckung einer Füllung (91) eines Silos (9), insbesondere eines Fahrsilos, wenigstens umfassend:
- eine flexible Plane (2) zum wasser- und/oder luftdichten Abdecken zumindest eines Teils der Füllung (91);
- ein Abrollvorrichtung (3), welche eingerichtet ist, die Plane (2) über die Füllung (91) hinweg ab- und aufzurollen;
- wenigstens ein Aufnahmeraum (4) für ein Beschwerungsmaterial (M) zur Beschwerung der Plane (2);
- wenigstens ein Materialreservoir (7) für das Beschwerungsmaterial (M); und
- wenigstens eine Pumpe (6) zum Pumpen des Beschwerungsmaterials (M) über wenigstens einen Zulaufschlauch (71) vom Materialreservoir (7) in den Aufnahmeraum (4);
**dadurch gekennzeichnet, dass**
- der wenigstens ein Aufnahmeraum (4) als Schlauchsystem (41) mit einem Außenschlauch (411) und einem, im Inneren des Außenschlauchs (411) verlaufenden Innenschlauch (412) gebildet ist,
- wobei der Innenschlauch (412) wenigstens eine Öffnung (4123) umfasst, die das vom Innenschlauch (412) umschlossene Volumen mit dem vom Außenschlauch (411) umschlossenen Volumen verbindet;
- und wobei der Innenschlauch (412) und der Außenschlauch (411) über ein Verbindungselement (5) derart mit der Pumpe (6) und dem Materialreservoir (7) wirkverbunden sind, dass für das Beschwerungsmaterial (M) ein geschlossenes Umlaufsystem aus Schlauchsystem (41), Pumpe (6) und Materialreservoir (7) gebildet ist.

2. System (1) nach Anspruch 1, **dadurch gekennzeichnet, dass** das Verbindungselement (5) einen ersten Anschlussabschnitt (51) zur Wirkverbindung mit dem Außenschlauch (411) des Schlauchsystems (41), einen zweiten Anschlussabschnitt (52) zur Wirkverbindung mit dem Innenschlauch (412) des Schlauchsystems (41) und einen dritten Anschlussabschnitt (53) zur Wirkverbindung mit einem Rücklaufschlauch (72) zum Rücklauf des Beschwerungsmaterials (M) zum Materialreservoir (7) umfasst, wobei das Schlauchsystem (41) mit dem Verbindungselement (5) derart verbunden ist, dass der Außenschlauch (411) direkt mit dem ersten Anschlussabschnitt (51) und der Innenschlauch (412) durch ein offenes Ende (4111) des Außenschlauchs (411) und das Innere des Verbindungselements (5) hindurch mit dem zweiten Anschlussabschnitt (52) verbindbar ist.

3. System (1) nach Anspruch 2, **dadurch gekennzeichnet, dass** der zweite Anschlussabschnitt (52) von einem Deckel (55) nach außen hin dicht abgeschlossen ist, wobei der Deckel (55) wenigstens ein Durchgangsrohr (551) mit einem ersten, außerhalb des Verbindungselements (5) liegenden Ende (5511) und einem zweiten, innerhalb des Verbindungselements (5) liegenden Ende (5512) umfasst, so dass das Beschwerungsmaterial (M) vom Materialreservoir (7) durch das Durchgangsrohr (551) in das Innere des Verbindungselements (5), insbesondere in das Innere des Innenschlauchs (411), gelangen kann.

4. System (1) nach Anspruch 3, **dadurch gekennzeichnet,**
- **dass** das erste, außerhalb des Verbindungselements (5) liegende Ende (5511) des Durchgangsrohrs (551) mit dem Zulaufschlauch (71) für das Beschwerungsmaterial (M) verbindbar ist; und
- **dass** das zweite, innerhalb des Verbindungselements (5) liegende Ende (5512) des Durchgangsrohrs (551) mit dem Innenschlauch (412) verbindbar ist.

5. System (1) nach Anspruch 3 oder 4, **dadurch gekennzeichnet, dass** der Deckel (55) über eine Schraub- und/oder Steckverbindung mit dem zweiten Anschlussabschnitt (52) des Verbindungselements (5) verbindbar ist.

6. System (1) nach einem oder mehreren der vorherigen Ansprüche, **dadurch gekennzeichnet, dass** am Innenschlauch (412) eine Vielzahl von Öffnungen (4123) angeordnet sind, wobei die Öffnungen (4123) vorzugsweise entlang der Längsachse des Innenschlauchs (412) zueinander derart beabstandet angeordnet sind, dass ein Abstand (A) zwischen den einzelnen Öffnungen (4123) in Richtung eines geschlossenen Endes (4122) des Innenschlauchs (412) zunimmt.

7. System (1) nach Anspruch 6, **dadurch gekennzeichnet, dass** die Öffnungen (4123) zyklisch am Mantel des Innenschlauchs (412) angeordnet sind, so dass sie bezüglich der Längsachse des Innenschlauchs (412) auf unterschiedlichen Parallelen zu dieser Längsachse liegen.

8. System (1) nach einem oder mehreren der vorherigen Ansprüche, **dadurch gekennzeichnet, dass** der Innenschlauch (412) über ein Verbindungsmittel (415) wenigstens abschnittsweise mit der Innenwand des Außenschlauchs (411) verbunden ist,
- wobei die Verbindung zwischen Innenschlauch (412) und Außenschlauch (411) über das Verbindungsmittel (415) vorzugsweise bezüglich einer Länge (L) des Schlauchsystems (41) in einem mittleren Bereich gebildet ist;
- und wobei der Innenschlauch (412) an einem dem Verbindungselement (5) nahen Ende des Schlauchsystems (41) vorzugsweise unverbunden mit dem Außenschlauch (411) bleibt und mittels eines Führungsschlauchs zum Verbindungsmittel (5) geführt wird.

9. System (1) nach einem oder mehreren der vorherigen Ansprüche, **gekennzeichnet durch** wenigstens einen Temperatursensor (8) zur Messung der Temperatur des Beschwerungsmaterials (M), wobei der Temperatursensor (8) vorzugsweise im Bereich des Verbindungselements (5) angeordnet ist.

10. System (1) nach einem oder mehreren der vorherigen Ansprüche, **dadurch gekennzeichnet, dass** das Materialreservoir (7) ein im Erdboden angeordneter Behälter ist, welcher eingerichtet ist, mit der Umgebung Wärme auszutauschen,
- wobei das Materialreservoir (7) vorzugsweise ein zylindrischer Behälter mit einer Höhe von 3,5 bis 4,5 m, bevorzugt 4,0 m, ist;
- und/oder wobei das Materialreservoir (7) vorzugsweise derart im Erdboden angeordnet ist, dass es sich bis in eine Tiefe von 3,5 bis 5,5 m, bevorzugt 4,0 bis 5,0 m, unter die Erdoberfläche hinab erstreckt.

11. System (1) nach Anspruch 10, **dadurch gekennzeichnet, dass** das als ein im Erdboden angeordneter Behälter ausgestaltete Materialreservoir (7) einen Eintritt (73) für das vom Aufnahmeraum (4) zum Materialreservoir (7) fließende Beschwerungsmaterial (M) und einen Austritt (74) für das vom Materialreservoir (7) zum Aufnahmeraum (4) fließende Beschwerungsmaterial (M) umfasst, wobei der Eintritt (73) bezüglich des Erdbodens in einer größeren Tiefe liegt als der Austritt (74).

12. System (1) nach einem oder mehreren der vorherigen Ansprüche, **dadurch gekennzeichnet,**
- **dass** der Zulaufschlauch (71) eingerichtet ist, mit der Umgebung Wärme auszutauschen; und/oder
- **dass** der Zulaufschlauch (71) einen ersten Zulaufabschnitt (711) aufweist, welcher vom Materialreservoir (7) über die Pumpe (6) zu einem Steuerungsschacht (76) verläuft, und wenigstens einen zweiten Zulaufabschnitt (712) aufweist, welcher vom Steuerungsschacht (76) aus innerhalb eines Bodenbereichs (92) des Silos (9) und dann wieder zurück in den Steuerungsschacht (76) verläuft, wobei wenigstens ein Teil des Zulaufschlauches (71) des zweiten Zulaufabschnittes (712) vorzugsweise in einen Boden (94) des Silos (9) integriert ist.

13. System (1) nach einem oder mehreren der vorherigen Ansprüche, **gekennzeichnet durch** wenigstens eine Sammelvorrichtung (SV) für Regenwasser (RW), welche eingerichtet ist, Regenwasser (RW), welches sich in wenigstens einem Sammelbereich (23) auf der Plane (2) sammelt, aufzunehmen und, vorzugsweise über wenigstens eine Filtervorrichtung (F), dem Materialreservoir (7) als Beschwerungsmaterial (M) zuzuführen.

14. Verfahren zur Abdeckung einer Füllung (91) eines Silos (9), insbesondere eines Fahrsilos, mit einem System (1) mit den Merkmalen eines oder mehrerer der Ansprüche 1 bis 13, bei dem zum wasser- und/oder luftdichten Abdecken zumindest eines Teils der Füllung (91) des Silos (9) mit einer flexiblen Plane (2), diese Plane (2) dadurch beschwert wird, dass
- ein Beschwerungsmaterial (M) innerhalb eines geschlossenen Umlaufsystems aus
- einem,
- an der Plane (2) angeordneten,
- als Schlauchsystem (41) mit einem Außenschlauch (411) und einem, im Inneren des Außenschlauchs (411) verlaufenden Innenschlauch (412) ausgebildeten,
Aufnahmeraum (4),
- einer Pumpe (6) und
- einem Materialreservoir (7)
kontinuierlich gepumpt wird.

15. Verfahren nach Anspruch 14, bei dem das Beschwerungsmaterial (M) aus dem Materialreservoir (7) aus einem Bereich des Materialreservoirs (7) nahe der Erdoberfläche entnommen und zum Aufnahmeraum (4) transportiert wird und in einem tieferliegenden Bereich des Materialreservoirs (7) näher zum Erdinneren, dem Materialreservoir (7) wieder zugeführt wird, nachdem es den Aufnahmeraum (4) durchquert hat; wobei bevorzugt
- die Leistung der Pumpe (6) in Abhängigkeit der Temperaturdaten eines im System (1) vorgesehenen Temperatursensors (8) geregelt wird; und/oder
- bei dem die Leistung der Pumpe (6) zeitgesteuert ist.

## Claims

1. System (1) for covering a filling (91) of a silo (9), in particular of a bunker silo, comprising at least:
- a flexible tarpaulin (2) for covering at least part of the filling (91) in a watertight and/or airtight manner;
- a rolling device (3) which is designed to roll the tarpaulin (2) off and on over the filling (91);
- at least one storage space (4) for a weighting material (M) to weight down the tarpaulin (2);
- at least one material reservoir (7) for the weighting material (M); and
- at least one pump (6) for pumping the weighting material (M) via at least one inlet hose (71) from the material reservoir (7) into the receiving space (4);
**characterized in that**
- the at least one receiving space (4) is formed as a hose system (41) with an outer hose (411) and an inner hose (412) running inside the outer hose (411),
- wherein the inner hose (412) comprises at least one opening (4123) which connects the volume enclosed by the inner hose (412) to the volume enclosed by the outer hose (411);
- and wherein the inner hose (412) and the outer hose (411) are operatively connected to the pump (6) and the material reservoir (7) via a connecting element (5) in such a way that a closed circulation system consisting of a hose system (41), pump (6) and material reservoir (7) is created.

2. System (1) according to claim 1, **characterized in that** the connecting element (5) has a first connection section (51) for operative connection to the outer hose (411) of the hose system (41), a second connection section (52) for operative connection to the inner hose (412) of the hose system (41), and a third connection section (53) for operative connection to a return hose (72) for returning the weighting material (M) to the material reservoir (7), wherein the hose system (41) is connected to the connecting element (5) in such a way that the outer hose (411) can be connected directly to the first connection section (51) and the inner hose (412) can be connected to the second connection section (52) through an open end (4111) of the outer hose (411) and the interior of the connecting element (5).

3. System (1) according to claim 2, **characterized in that** the second connection section (52) is sealed off from the outside by a lid (55), wherein the lid (55) comprises at least one passage tube (551) with a first end (5511) located outside the connecting element (5) and a second end (5512) located inside the connecting element (5), so that the weighting material (M) can pass from the material reservoir (7) through the passage tube (551) into the interior of the connecting element (5), in particular into the interior of the inner hose (411).

4. System (1) according to claim 3, **characterized in that**
- the first end (5511) of the passage tube (551) located outside the connecting element (5) is connectable to the inlet hose (71) for the weighting material (M); and
- the second end (5512) of the passage tube (551) located inside the connecting element (5) is connectable to the inner hose (412).

5. System (1) according to claim 3 or 4, **characterized in that** the lid (55) is connectable to the second connection section (52) of the connecting element (5) via a screw and/or plug connection.

6. System (1) according to one or more of the preceding claims, **characterized in that** a plurality of openings (4123) are arranged on the inner hose (412), wherein the openings (4123) are preferably arranged along the longitudinal axis of the inner hose (412) at such distances from one another that a distance (A) between the individual openings (4123) increases in the direction of a closed end (4122) of the inner hose (412).

7. System (1) according to claim 6, **characterized in that** the openings (4123) are arranged cyclically on the casing of the inner hose (412) so that they lie on different parallels to the longitudinal axis of the inner hose (412) with respect to this longitudinal axis.

8. System (1) according to one or more of the preceding claims, **characterized in that** the inner hose (412) is connected at least in sections to the inner wall of the outer hose (411) by means of a connecting device (415),
- wherein the connection between the inner hose (412) and the outer hose (411) by means of a connecting device (415) is preferably formed in a middle region with respect to a length (L) of the hose system (41);
- and wherein the inner hose (412) remains preferably unconnected to the outer hose (411) at an end of the hose system (41) close to the connecting element (5) and is guided to the connecting device (5) by means of a guide hose.

9. System (1) according to one or more of the preceding claims, **characterized by** at least one temperature sensor (8) for measuring the temperature of the weighting material (M), wherein the temperature sensor (8) is preferably arranged in the region of the connecting element (5).

10. System (1) according to one or more of the preceding claims, **characterized in that** the material reservoir (7) is a container arranged in the ground, which is designed to exchange heat with the environment,
- wherein the material reservoir (7) is preferably a cylindrical container with a height of 3.5 to 4.5 m, preferably 4.0 m;
- and/or wherein the material reservoir (7) is preferably arranged in the ground in such a way that it extends to a depth of 3.5 to 5.5 m, preferably 4.0 to 5.0 m, below the earth's surface.

11. System (1) according to claim 10, **characterized in that** the material reservoir (7), designed as a container arranged in the ground, has an inlet (73) for the weighting material (M) flowing from the receiving chamber (4) to the material reservoir (7) and an outlet (74) for the weighting material (M) flowing from the material reservoir (7) to the receiving space (4), wherein the inlet (73) is located at a greater depth relative to the ground than the outlet (74).

12. System (1) according to one or more of the preceding claims, **characterized in that**
- the inlet hose (71) is designed to exchange heat with the environment; and/or
- the inlet hose (71) has a first inlet section (711) which runs from the material reservoir (7) via the pump (6) to a control shaft (76), and has at least one second inlet section (712) which runs from the control shaft (76) within a bottom area (92) of the silo (9) and then back into the control shaft (76), wherein at least part of the inlet hose (71) of the second inlet section (712) is preferably integrated into a bottom (94) of the silo (9).

13. System (1) according to one or more of the preceding claims, **characterized by** at least one collection device (SV) for rainwater (RW), which is designed to receive rainwater (RW) which collects in at least one collection area (23) on the tarpaulin (2) and, preferably via at least one filter device (F), feed it to the material reservoir (7) as weighting material (M).

14. Method for covering a filling (91) of a silo (9), in particular a bunker silo, with a system (1) having the features of one or more of claims 1 to 12, in which, for the watertight and/or airtight covering of at least part of the filling (91) of the silo (9) with a flexible tarpaulin (2), this tarpaulin (2) is weighted down by
- a weighting material (M) which is pumped continually within a closed circulation system consisting of
- a receiving chamber (4)
- designed as a hose system (41)
- which is placed on the tarpaulin (2)
- and which is built with an outer hose (411) and an inner hose (412) running inside the outer hose (411),
- a pump (6) and
- a material reservoir (7).

15. Method according to claim 14, in which the weighting material (M) is taken from the material reservoir (7) from an area of the material reservoir (7) close to the earth's surface and transported to the receiving chamber (4) and returned to a deeper area of the material reservoir (7) closer to the earth's interior after it has passed through the receiving space (4); wherein, preferably
- the output of the pump (6) is regulated as a function of the temperature data from a temperature sensor (8) provided in the system (1); and/or
- the output of the pump (6) is time-controlled.

## Revendications

1. Système (1) destiné à recouvrir un remplissage (91) d'un silo (9), en particulier d'un silo tranché, comprenant au moins :
- une bâche flexible (2) destinée à recouvrir de manière étanche à l'eau et/ou à l'air au moins une partie du remplissage (91) ;
- un dispositif d'enroulement (3) qui est conçu pour dérouler et enrouler la bâche (2) sur le remplissage (91) ;
- au moins un espace de réception (4) pour un matériau alourdissant (M) destiné à lester la bâche (2) ;
- au moins un réservoir de matériau (7) pour le matériau alourdissant (M) ; et
- au moins une pompe (6) pour pomper le matériau alourdissant (M) via au moins un tuyau d'alimentation (71) depuis le réservoir de matériau (7) vers l'espace de réception (4) ;
**caractérisé en ce que**
- le au moins un espace de réception (4) est formé comme un système de tuyaux (41) avec un tuyau extérieur (411) et un tuyau intérieur (412) s'étendant à l'intérieur du tuyau extérieur (411),
- le tuyau intérieur (412) comprenant au moins une ouverture (4123) qui relie le volume entouré par le tuyau intérieur (412) au volume entouré par le tuyau extérieur (411) ;
- et le tuyau intérieur (412) et le tuyau extérieur (411) étant reliés de manière fonctionnelle à la pompe (6) et au réservoir de produit (7) par l'intermédiaire d'un élément de raccordement (5) de telle sorte qu'un système de circulation fermé composé du système de tuyaux (41), pompe (6) et réservoir de matériau (7) est formé.

2. Système (1) selon la revendication 1, **caractérisé en ce que** l'élément de raccordement (5) comprend une première section de raccordement (51) pour la liaison active avec le tuyau extérieur (411) du système de tuyaux (41), une deuxième section de raccordement (52) pour la liaison active avec le tuyau intérieur (412) du système de tuyaux (41) et une troisième section de raccordement (53) pour la liaison active à un tuyau de retour (72) pour le retour du matériau alourdissant (M) vers le réservoir de matériau (7), le système de tuyaux (41) étant relié à l'élément de connexion (5) de telle sorte que le tuyau extérieur (411) peut être raccordé directement à la première section de raccordement (51) et que le tuyau intérieur (412) peut être raccordé à la deuxième section de raccordement (52) à travers d'une extrémité ouverte (4111) du tuyau extérieur (411) et l'intérieur de l'élément de raccordement (5).

3. Système (1) selon la revendication 2, **caractérisé en ce que** la deuxième section de raccordement (52) est fermée de manière étanche vers l'extérieur par un couvercle (55), le couvercle (55) comprenant au moins un tube traversant (551) avec une première extrémité (5511) située à l'extérieur de l'élément de raccordement (5), de sorte que le matériau alourdissant (M) peut passer du réservoir de matériau (7) à l'intérieur de l'élément de connexion (5) à travers le tube de passage (551), en particulier à l'intérieur du tuyau interne (411).

4. Système (1) selon la revendication 3, **caractérisé en ce que**
- la première extrémité (5511) du tube de passage (551) située à l'extérieur de l'élément de raccordement (5) pouvant être raccordée au tuyau d'alimentation (71) pour le matériau alourdissant (M) ; et
- que la deuxième extrémité (5512) du tube de passage (551), située à l'intérieur de l'élément de raccordement (5), pouvant être raccordée au tuyau intérieur (412).

5. Système (1) selon la revendication 3 ou 4, **caractérisé en ce que** le couvercle (55) pouvant être relié à la deuxième partie de raccordement (52) de l'élément de raccordement (5) par une connexion vissée et/ou enfichable.

6. Système (1) selon une ou plusieurs des revendications précédentes, **caractérisé en ce qu'**une pluralité d'ouvertures (4123) sont disposées sur le tuyau intérieur (412), les ouvertures (4123) sont de préférence espacées les unes des autres le long de l'axe longitudinal du tuyau intérieur (412) de telle sorte qu'une distance (A) entre les différentes ouvertures (4123) augmente en direction d'une extrémité fermée (4122) du tuyau intérieur (412).

7. Système (1) selon la revendication 6, **caractérisé en ce que** les ouvertures (4123) sont disposées de manière cyclique sur l'enveloppe du tuyau intérieur (412) de telle sorte qu'elles se trouvent sur différentes parallèles à l'axe longitudinal du tuyau intérieur (412) par rapport à cet axe longitudinal.

8. Système (1) selon une ou plusieurs des revendications précédentes, **caractérisé en ce que** le tuyau intérieur (412) est relié au moins par sections à la paroi intérieure du tuyau extérieur (411) par un moyen de raccordement (415),
- la liaison entre le tuyau intérieur (412) et le tuyau extérieur (411) étant réalisée par le moyen de liaison (415) de préférence sur une longueur (L) du système de tuyaux (41) dans une zone centrale ;
- et le tuyau intérieur (412) restant de préférence non relié au tuyau extérieur (411) à une extrémité du système de tuyaux (41) proche de l'élément de liaison (5) et étant guidé vers le moyen de liaison (5) au moyen d'un tuyau de guidage.

9. Système (1) selon une ou plusieurs des revendications précédentes, **caractérisé par** au moins un capteur de température (8) pour mesurer la température du matériau alourdissant (M), le capteur de température (8) étant de préférence disposé dans la zone de l'élément de liaison (5).

10. Système (1) selon une ou plusieurs des revendications précédentes, **caractérisé en ce que** le réservoir de matériau (7) est un conteneur disposé dans le sol, qui est conçu pour échanger de la chaleur avec l'environnement,
- le réservoir de matériau (7) étant de préférence un conteneur cylindrique d'une hauteur de 3,5 à 4,5 m, de préférence de 4,0 m ;
- et/ou le réservoir de matériau (7) étant de préférence disposé dans le sol de telle sorte qu'il s'étend jusqu'à une profondeur de 3,5 à 5,5 m, de préférence de 4,0 à 5,0 m, sous la surface du sol.

11. Système (1) selon la revendication 10, **caractérisé en ce que** le réservoir de matériau (7) conçu comme un conteneur disposé dans le sol comporte une entrée (73) pour le matériau alourdissant (M) s'écoulant du réservoir de matériau (7) vers l'espace de réception (4) et une sortie (74) pour le matériau alourdissant (M) s'écoulant du réservoir de matériau (7) vers l'espace de réception (4), l'entrée (73) étant située à une plus grande profondeur par rapport au sol que la sortie (74).

12. Système (1) selon une ou plusieurs des revendications précédentes, **caractérisé en ce que**
- le tuyau d'alimentation (71) est conçu pour échanger de la chaleur avec l'environnement; et/ou
- que le tuyau d'alimentation (71) comporte une première section d'alimentation (711) qui s'étend du réservoir de matériau (7) à un puits de commande (76) via la pompe (6), et au moins une deuxième section d'alimentation (712) qui s'étend du puits de commande (76) à l'intérieur d'une zone de fond (92) du silo (9), puis retourne dans le puits de commande (76), au moins une partie du tuyau d'alimentation (71) de la deuxième section d'alimentation (712) étant de préférence intégrée dans un fond (94) du silo (9).

13. Système (1) selon une ou plusieurs des revendications précédentes, **caractérisé par** au moins un dispositif de collecte (SV) pour l'eau de pluie (RW), qui est conçu pour recueillir l'eau de pluie (RW) qui s'accumule dans au moins une zone de collecte (23) sur la bâche (2) et, de préférence via au moins un dispositif de filtrage (F), l'acheminer vers le réservoir de matériau (7) en tant que matériau alourdissant (M).

14. Procédé pour recouvrir un remplissage (91) d'un silo (9), en particulier d'un silo-tranchée, avec un système (1) présentant les caractéristiques d'une ou plusieurs des revendications 1 à 12, dans lequel, pour recouvrir de manière étanche à l'eau et/ou à l'air au moins une partie du remplissage (91) du silo (9) avec une bâche flexible (2), cette bâche (2) est alourdie par
- un matériau alourdissant (M) qui est réparti continuellement par la pompe à l'intérieur d'un système de circulation fermé composé
- d'un espace de réception (4),
- sous forme d'un système de tuyaux (41)
- arrangé sur une bâche flexible (2)
- et qui est composé d'un tuyau extérieur (411) et un tuyau intérieur (412) s'étendant à l'intérieur du tuyau extérieur (411),
- une pompe (6) et
- un réservoir de matériau (7).

15. Procédé selon la revendication 14, dans lequel le matériau alourdissant (M) est prélevé du réservoir de matériau (7) dans une zone du réservoir de matériau (7) proche de la surface terrestre et transporté vers l'espace de réception (4), puis renvoyé vers une zone plus profonde du réservoir de matériau (7) plus proche de l'intérieur de la terre, après avoir traversé l'espace de réception (4) ; procédé dans lequel de préférence
- la puissance de la pompe (6) est régulée en fonction des données de température d'un capteur de température (8) prévu dans le système (1) ; et/ou
- la puissance de la pompe (6) est commandée par minuterie.
